# EUROPÄISCHE PATENTANMELDUNG

(11) **EP 3 104 124 A1**
(43) Veröffentlichungstag der Anmeldung: **14.12.2016**
(21) Anmeldenummer: 15001712.7
(22) Anmeldetag: 08.06.2015
(51) Int. Cl.: G01C 21/36

(54) **MAUTERHEBUNGSVERFAHREN, MAUTSYSTEM UND FAHRZEUGEINRICHTUNG**

(71) Anmelder: Toll Collect GmbH, 10785 Berlin (DE)
(72) Erfinder: Roth, Martina, 14947 Nuthe-Urstromtal (DE)

(57) **Zusammenfassung**

Es werden ein Mauterhebungsverfahren und ein Mautsystem bereitgestellt, in denen eine Fahrzeugeinrichtung (10) mit einer optischen Erfassungseinrichtung (14) ausgestattet ist, die ausgebildet ist, wenigstens ein Bild einer straßenseitigen ersten Anordnung von maschinenlesbaren Zeichen (41, 41a, 41 b, 41c) aufzunehmen und damit eine erste Eigenpositionsinformation, die von der straßenseitigen ersten Anordnung von maschinenlesbaren Zeichen (41, 41a, 41b, 41c) bereitgestellt wird, optisch zu erfassen, und in denen aus einer oder mehreren erfassten ersten Eigenpositionsinformationen eine Mautgebühr für die Nutzung desjenigen Streckenabschnittes (40) ermittelt wird, dessen Befahrung mit der Erfassung der ersten Eigenpositionsinformation impliziert ist.

## Beschreibung

Die Erfindung betrifft ein Mauterhebungsverfahren, ein Mautsystem und eine Fahrzeugeinrichtung nach den Oberbegriffen der unabhängigen Ansprüche.

Dem Stand der Technik zufolge gibt es drei grundverschiedene Verfahren der Erhebung von Maut für die Nutzung von mautpflichtigen Streckenabschnitten durch ein Fahrzeug: a) das manuelle Verfahren, bei dem eine Straßennutzungsberechtigung im Vor- oder Nachwege der Benutzung vom Nutzer gegen Bezahlung an einer Verkaufsstelle (z. B. an einem Mauthäuschen mit Schranke oder an einem Mautterminal) ähnlich wie eine Fahrkarte am Automaten oder von einem Verkäufer erworben wird, b) das fremdverortende automatische Verfahren, bei dem eine straßenseitige Erfassungseinrichtung (road side equipment, RSE) eine Kennung eines vorbeifahrenden Fahrzeugs erfasst (beispielsweise optisch durch die Bildaufnahme des Kennzeichenschildes des Fahrzeugs und/ oder kommunikationstechnisch durch Empfang einer Nachricht von einer Kurzstreckenkommunikationseinrichtung des Fahrzeugs) und diese dem Streckenabschnitt zuordnet, für den die RSE die Erfassung durchführt, und c) das selbstverortende automatische Verfahren, bei dem eine Fahrzeugeinrichtung eine Eigenpositionsinformation empfängt oder bestimmt, die dem benutzten Streckenabschnitt entspricht oder für den benutzten Streckenabschnitt repräsentativ ist.

Aus Gründen der Einfachheit und der geringen Kosten setzt sich mehr und mehr das selbstverortende automatische Verfahren c) durch, welches durch die Oberbegriffe der unabhängigen Ansprüche beschrieben wird.

Dabei wird unter Mauterhebung im Sinne der vorliegenden Erfindung die Zuordnung einer Mautgebühr für einen durch das Fahrzeug befahrenen mautpflichtigen Streckenabschnitt zu diesem Fahrzeug verstanden. Diese Zuordnung kann beispielsweise dezentral durch die zumindest zeitweilige Speicherung der Mautgebührendaten in einer vom Fahrzeug mitgeführten Speichereinrichtung erfolgen und/ oder zentral durch eine Verknüpfung der Mautgebührendaten mit einer zumindest zeitweise in einem zentralen Datenspeicher gespeicherten Fahrzeugkennung.

Bei einem Mautsystem mit selbstverortenden Fahrzeugeinrichtungen kann zumindest zu Erhebungszwecken dann auf funktechnische straßenseitige Sendeeinrichtungen verzichtet werden, wenn eine von der Fahrzeugeinrichtung umfasste Positionsbestimmungseinrichtung mit einem GNSS-Empfänger aus Signalen von Satelliten eines Globalen Navigationssatellitensystems (GNSS) die besagte Eigenpositionsinformation bestimmt, welche von einer elektronischen Erfassungseinrichtung der Fahrzeugeinrichtung erfasst werden.

Eine solche Fahrzeugeinrichtung ist jedoch tatsächlich auf die Verfügbarkeit dieser GNSS-Signale angewiesen. Bleiben diese GNSS-Signale aufgrund einer Abschattung (beispielsweise bei Fahrt durch einen Tunnel), des Defektes eines oder mehrerer Satelliten oder gar eines Abschaltens der GNSS-Satelliten aus, so kann die Fahrzeugeinrichtung ihre Position nicht bestimmen mit der Folge, dass keine Maut mehr erhoben werden kann. Eine vergleichbare Situation tritt auf, wenn GNSS-Signale durch Störsignale überlagert sind, die verhindern, dass die Fahrzeugeinrichtung die GNSS-Signale, die nicht aus dem Störsignal gefiltert werden können, zu Eigenpositionsinformationen verarbeiten kann. Zudem kann die Empfangsqualität, die Anzahl sendender Satelliten oder ihre Stellung zueinander so ungünstig sein, dass die Fahrzeugeinrichtung trotz des Empfangs von GNSS-Signalen ihre Eigenposition nicht zuverlässig genug für ein sicheres Ergebnis hinsichtlich der Aussage über die Befahrung entweder eines mautpflichtigen oder mautfreien Streckenabschnitts bestimmen kann, weil die Eigenposition mit einem zu hohen Fehler behaftet ist.

Aufgabe der Erfindung ist es, für ein Mauterhebungsverfahren, ein Mautsystem und eine Fahrzeugeinrichtung für den Fall eines unzureichenden GNSS-Empfangs eine kostengünstige Alternative zur Eigenpositionsbestimmung bereitzustellen.

Diese Aufgabe wird durch die unabhängigen Ansprüche gelöst. Vorteilhafte Weiterbildungen sind Gegenstand der abhängigen Ansprüche. Merkmale sowie Wirkungen und Vorteile dieser Merkmale eines Aspektes oder eines Ausführungsbeispiels der Erfindung gelten als übertragbar auf jeden anderen Aspekt und jedes andere Ausführungsbeispiel der Erfindung, sofern dies inhaltlich nicht unlogisch und technisch nicht unmöglich ist.

Zusammengefasst stellt die Erfindung ein Mauterhebungsverfahren und ein Mautsystem bereit, in denen eine Fahrzeugeinrichtung mit einer optischen Erfassungseinrichtung ausgestattet ist, die ausgebildet ist, wenigstens ein Bild einer straßenseitigen Anordnung maschinenlesbaren Zeichen aufzunehmen und damit mit denen eine erste Eigenpositionsinformation, die von der straßenseitigen Anordnung von maschinenlesbaren Zeichen bereitgestellt wird, optisch zu erfassen, und in denen aus einer oder mehreren erfassten ersten Eigenpositionsinformation eine Mautgebühr für die Nutzung desjenigen Streckenabschnittes ermittelt wird, dessen Befahrung mit der Erfassung der ersten Eigenpositionsinformation impliziert ist.

Gemäß einem ersten Aspekt der Erfindung wird Mautsystem bereitgestellt, das wenigstens eine von einem Fahrzeug mitgeführte Fahrzeugeinrichtung mit wenigstens einer ersten Erfassungseinrichtung, die ausgebildet ist zur Erfassung von wenigstens einer ersten Eigenpositionsinformation, die repräsentativ ist für wenigstens einen Streckenabschnitt, den das Fahrzeug befährt, und wenigstens einen ersten Speicher, in dem zumindest zeitweilig wenigstens eine Fahrzeugkennung des Fahrzeugs gespeichert ist, umfasst und ausgebildet ist, aus einer erfassten ersten Eigenpositionsinformation wenigstens eine erste Streckenabschnittskennung des befahrenen Streckenabschnitts zu ermitteln, anhand wenigstens der ermittelten ersten Streckenabschnittskennung eine Mautgebühr für wenigstens den vom Fahrzeug befahrenen Streckenabschnitt zu bestimmen, der der ermittelten Streckenabschnittskennung entspricht, und die bestimmte Mautgebühr im ersten Speicher oder in wenigstens einem zweiten Speicher des Mautsystems zu speichern, sowie dadurch gekennzeichnet ist, dass das Mautsystem wenigstens eine straßenseitige Anordnung von maschinenlesbaren Zeichen umfasst, mit der die erste Eigenpositionsinformation bereitgestellt wird, und die erste Erfassungseinrichtung eine optische Erfassungseinrichtung ist, die ausgebildet ist, wenigstens ein Bild der straßenseitigen Anordnung von maschinenlesbaren Zeichen aufzunehmen und damit die erste Eigenpositionsinformation der straßenseitigen Anordnung von maschinenlesbaren Zeichen optisch zu erfassen.

Insbesondere ist dabei das Mautsystem ausgebildet, von der optischen Erfassungseinrichtung aufgenommene Bilder zu verarbeiten, um eine in den Bildern allfällig enthaltene erste Eigenpositionsinformation zu erfassen. Beispielsweise kann das Mautsystem ausgebildet sein, Bilddaten von von der optischen Erfassungseinrichtung aufgenommenen Bildern zu verarbeiten, um erste Eigenpositionsinformation in Form von Text (Zahlen oder Zeichen) oder in Form eines Codes (1-D-Bar-Code oder 2-D-Pixel-code) aus den Bilddaten zu gewinnen.

Insbesondere ist der zweite Speicher von derjenigen Datenverarbeitungseinrichtung (mobile dezentrale Datenverarbeitungseinrichtung in Form der Fahrzeugeinrichtung oder stationäre zentrale Datenverarbeitungseinrichtung in Form eines Rechenzentrums einer Mautzentrale des Mautsystems) umfasst, die auch den ersten Speicher umfasst. Damit wird über die Zugehörigkeit des ersten und zweiten Speichers zu ein- und derselben Datenverarbeitungseinrichtung, insbesondere durch die Kopplung des ersten und zweiten Speichers an ein- und denselben Prozessor dieser Datenverarbeitungseinrichtung, eine datentechnische Verknüpfung von Fahrzeugkennung und Streckenabschnittskennung geschaffen.

Die Information der Fahrzeugkennung dient im Rahmen einer Kontrolle dem Vergleich einer erhobenen fahrzeugspezifischen Mautgebühr mit wenigstens einem mautrelevanten Fahrzeugmerkmal (beispielsweise Achsklasse, Schadstoffklasse und/ oder Gewichtsklasse), das der Fahrzeugkennung zugeordnet ist, welche eine Kontrolleinrichtung aus einer straßenseitig erfassten Bildaufnahme des Fahrzeugkennzeichenschildes ermittelt. Spätestens mit der Zuordnung der Mautgebühr zu einer Fahrzeugkennung wird die Fahrzeugeinrichtung dem Fahrzeug zugeordnet, so dass ein mautrelevantes Merkmal eines kontrollierten Fahrzeugs mit dem Fahrzeug in Verbindung gebracht werden kann, dessen Fahrzeugeinrichtung zur Erhebung der fahrzeugspezifischen Mautgebühr beigetragen hat.

Mithin wird durch das Vorsehen einer in einem Speicher des Mautsystems gespeicherten Fahrzeugkennung der Forderung nach einer Kontrolle der Erhebung einer fahrzeugbezogenen Mautgebühr genüge getan.

Dabei kann der erste Speicher von der Fahrzeugeinrichtung oder von einer zentralen Datenverarbeitungsanlage des Mautsystems umfasst sein. Der optionale zweite Speicher kann ebenfalls von der Fahrzeugeinrichtung oder von einer zentralen Datenverarbeitungseinrichtung des Mautsystems umfasst sein. Wird die Mautgebühr in einem ersten Speicher und/ oder in einem zweiten Speicher gespeichert, der von der zentralen Datenverarbeitungsanlage umfasst ist, so ist eine dezentrale Kommunikationseinrichtung in der Fahrzeugeinrichtung vorzusehen, mit der die erfasste erste Eigenpositionsinformation, der ermittelte Streckenabschnitt und/ oder die bestimmte Mautgebühr - vorzugsweise zusammen mit der (Kopie der) Fahrzeugkennung, die in dem von der Fahrzeugeinrichtung umfassten ersten Speicher gespeichert ist - an die zentrale Datenverarbeitungsanlage versendet wird. Ein Beispiel für eine solche dezentrale Kommunikationseinrichtung ist ein Mobilfunkmodul, beispielsweise ein GSM-Modul, zur drahtlosen langreichweitigen Funkkommunikation mit Basisstationen eines Mobilfunknetzes, an das die zentrale Datenverarbeitungsanlage kommunikativ gekoppelt ist. Ein anderes Beispiel für eine solche dezentrale Kommunikationseinrichtung ist ein DSRC-Modul zur drahtlosen Kurzstreckenfunk- oder IR-kommunikation (DSRC = dedicated short-range communication) mit straßenseitigen DSRC-Sendeempfängern, die kommunikativ an die zentrale Datenverarbeitungsanlage gekoppelt sind.

Die Ermittlung des befahrenen Streckenabschnittes kann durch einen dezentralen Prozessor der Fahrzeugeinrichtung oder durch einen zentralen Prozessor einer zentralen Datenverarbeitungsanlage erfolgen, an die die Fahrzeugeinrichtung die zuvor erfasste erste Eigenpositionsinformation mittels einer dezentralen Kommunikationseinrichtung der Fahrzeugeinrichtung (beispielsweise Mobilfunkmodul und/ oder DSRC-Modul) versendet hat.

Die Bestimmung der Mautgebühr kann durch einen dezentralen Prozessor der Fahrzeugeinrichtung oder durch einen zentralen Prozessor einer zentralen Datenverarbeitungsanlage erfolgen, an die die Fahrzeugeinrichtung die zuvor erfasste erste Eigenpositionsinformation mittels einer dezentralen Kommunikationseinrichtung der Fahrzeugeinrichtung (beispielsweise Mobilfunkmodul und/ oder DSRC-Modul) zur Ermittlung des befahrenen Streckenabschnittes oder die zuvor durch einen dezentralen Prozessor der Fahrzeugeinrichtung ermittelten befahrenen Streckenabschnitt versendet hat.

Unter einem Streckenabschnitt wird beispielsweise ein Straßenabschnitt von einer bestimmten Länge verstanden. Die Länge eines solchen Straßenabschnittes kann durch die Weglänge zwischen einer ersten Zufahrt auf diesen Straßenabschnitt und einer, der ersten Zufahrt nächstgelegenen, ersten Abfahrt von diesem Straßenabschnitt bestimmt sein. Der Straßenabschnitt zwischen der ersten Zufahrt (Einmündung, Kreuzung) und der ersten Abfahrt (Kreuzung, Abzweigung) bildet dann zum Beispiel einen Streckenabschnitt.

Unter einem Streckenabschnitt kann auch ein Tunnel, eine Brücke oder ein Gebirgspass verstanden werden, die ebenfalls, soweit sie befahrbar sind, einen Straßenabschnitt von einer bestimmten Länge aufweisen können.

Erfindungsgemäß umfasst das Mautsystem wenigstens eine straßenseitige Anordnung von maschinenlesbaren Zeichen, mit der die erste Eigenpositionsinformation bereitgestellt wird.

Unter einer straßenseitigen Anordnung wird eine Anordnung neben der Straße, über der Straße oder auf der Straße verstanden, und zwar hinsichtlich der Anordnung über und neben der Straße in einem Straßenabstand zur Straße, in dem die erste Anordnung von maschinenlesbaren Zeichen maschinenlesbar optisch von einem Fahrzeug aus erfasst werden kann, das die erste Anordnung von maschinenlesbaren Zeichen passiert.

Für eine straßenseitige Anordnung von maschinenlesbaren Zeichen über der Straße beträgt der Straßenabstand der ersten Anordnung von maschinenlesbaren Zeichen zur Oberfläche der Straße bevorzugt weniger als 100 m und mehr als 4 m. Für eine straßenseitige Anordnung neben der Straße beträgt der Straßenabstand der ersten Anordnung von maschinenlesbaren Zeichen zum Straßenrand bevorzugt weniger als 100 m und mehr als 10 cm.

Ein Erfassungsabstand der straßenseitigen Anordnung von maschinenlesbaren Zeichen zu einem auf der Straße fahrenden Fahrzeug, in dem die Anordnung von maschinenlesbaren Zeichen maschinenlesbar optisch vom Fahrzeug aus erfasst werden kann, muss nicht notwendigerweise dem geringsten Abstand (Passage-Abstand) zwischen dem Fahrzeug und der ersten Anordnung von maschinenlesbaren Zeichen entsprechen, der beim Vorbeifahren des Fahrzeugs an der ersten Anordnung von maschinenlesbaren Zeichen auftreten kann. Denn die Erfassungszeit im Passage-Abstand ist sehr kurz, so dass eine Erfassung an einem Erfassungsort in einem Erfassungsabstand, der größer ist als der Passage-Abstand, vorzugsweise 1,5 bis 10 Mal so groß wie der Passage-Abstand, vorzuziehen ist.

Im Falle einer Anordnung neben oder über der Straße ist bevorzugt vorgesehen, dass die straßenseitige Anordnung von maschinenlesbaren Zeichen von einer straßenseitig angeordneten Tafel bereitgestellt wird.

Ein erstes Beispiel für eine straßenseitig angeordnete Tafel ist ein straßenseitig angeordnetes Schild, Plakat oder Banner, auf dem die straßenseitige Anordnung von maschinenlesbaren Zeichen aufgedruckt oder in einer anderen Art und Weise permanent aufgebracht ist. Vorzugsweise ist ein solches straßenseitig angeordnetes Schild, Plakat oder Banner mit einer Beleuchtungsvorrichtung ausgerüstet, die des nachts eingeschaltet wird, um die straßenseitige Anordnung von maschinenlesbaren Zeichen zu beleuchten und so die Maschinenlesbarkeit der maschinenlesbaren Zeichen bei Abwesenheit von Tageslicht zu gewährleisten.

Ein zweites Beispiel für eine straßenseitig angeordnete Tafel ist eine elektro-optische Anzeigevorrichtung, beispielsweise ein Leuchtdiodenfeld, das durch eine Steuerungsvorrichtung zur Darstellung der straßenseitigen Anordnung von maschinenlesbaren Zeichen angesteuert wird, indem Leuchtdioden, die zur Darstellung der maschinenlesbaren Zeichen beitragen, eingeschaltet werden oder bleiben und Leuchtdioden, die nicht zur Darstellung der maschinenlesbaren Zeichen beitragen, ausgeschaltet werden oder bleiben. Andere Beispiele für andere elektro-optische Anzeigevorrichtungen sind TFT-, LCD-, LCOS-, OLED-Bildschirme und dergleichen.

Ein drittes Beispiel für eine straßenseitige angeordnete Tafel ist eine Projektionsfläche, auf die die straßenseitige Anordnung von maschinenlesbaren Zeichen projiziert wird, beispielsweise mittels eines Dia-Projektors, eines DMD- oder eines LCD-Projektors.

Im Falle einer Anordnung auf der Straße kann die straßenseitige Anordnung von maschinenlesbaren Zeichen in Form von Markierungen direkt auf die Straßenoberfläche aufgebracht oder teilweise in den Straßenbelag eingebracht sein. Die Markierungen können mit Dispersionsfarbe oder Plastik in flüssiger Form auf die Straßenoberfläche aufgedruckt, aufgespritzt oder aufgerollt oder in fester Form (z. B. als Folie) aufgeklebt werden. Die Markierungen können auch durch Markierungsknöpfe aus Metall, Kunststoff oder Glas bereitgestellt werden. Markierungsknöpfe aus lichtdurchlässigem, vorzugsweise jedoch undurchsichtigen (weil beispielsweise milchig getrübten), Kunststoff oder Glas können jeweils eine Beleuchtungseinrichtung umfassen, die des nachts zu dem Zweck eingeschaltet wird, die straßenseitige Anordnung von maschinenlesbaren Zeichen auszuleuchten und so die Maschinenlesbarkeit der maschinenlesbaren Zeichen bei Abwesenheit von Tageslicht zu gewährleisten. Überdies können den Markierungen Heizelemente unterlegt sein oder die Markierungen können Heizelemente umfassen, so dass im Falle von Schneefall, dessen Schnee die Markierungen verdecken würde, der Schnee, nachdem er mit den Markierungen in Kontakt kommt, geschmolzen werden kann.

Eine Zufahrt zu einem mautpflichtigen Streckenabschnitt gilt als Straße, so dass eine zufahrtsseitige erste Anordnung von maschinenlesbaren Zeichen an einer Zufahrt eine spezielle straßenseitige Anordnung von maschinenlesbaren Zeichen ist. Eine Abfahrt von einem mautpflichtigen Streckenabschnitt gilt als Straße, so dass eine abfahrtsseitige erste Anordnung von maschinenlesbaren Zeichen an einer Abfahrt eine spezielle straßenseitige Anordnung von maschinenlesbaren Zeichen ist.

Eine zufahrtsseitige erste Anordnung von maschinenlesbaren Zeichen kann in einem geschlossenen Mautsystem an, über oder auf jeder Zufahrt zu einem mautpflichtigen Streckenabschnitt eines mautpflichtigen Streckennetzes und jeweils eine zufahrtsseitige erste Eigenpositionsinformation bereitstellen, die die Zufahrt repräsentiert, beispielsweise in Form einer Zufahrtskennung.

Eine abfahrtsseitige erste Anordnung von maschinenlesbaren Zeichen kann in einem geschlossenen Mautsystem an, über oder auf jeder Abfahrt zu einem mautpflichtigen Streckenabschnitt eines mautpflichtigen Streckennetzes und jeweils eine abfahrtsseitige erste Eigenpositionsinformation bereitstellen, die die Abfahrt repräsentiert, beispielsweise in Form einer Abfahrtskennung.

Mit der Kombination der ermittelten Kennung der Zufahrt aus einer zufahrtsseitigen ersten Eigenpositionsinformation und der ermittelten Kennung der Abfahrt aus einer abfahrtsseitigen ersten Eigenpositionsinformation lassen sich aus einer entsprechenden Knoten-Kanten-Matrix, in der die Zufahrten und Abfahrten die Knoten bilden und die Streckenabschnitte zwischen den Zufahrten und den Abfahrten die Kanten, die mautpflichtigen Streckenabschnitte des mautpflichtigen Streckennetzes bestimmen, die zwischen der Zufahrt und der Abfahrt befahren wurden.

Gehören eine Zufahrt und eine Abfahrt zu demselben ersten Streckenabschnitt, so wird nur die erste Streckenabschnittskennung dieses ersten Streckenabschnitts aus der Zufahrtskennung und der Abfahrtskennung ermittelt. Gehören eine Zufahrt dem ersten Streckenabschnitt und eine Abfahrt zu einem n-ten Streckenabschnitt, so werden die erste Streckenabschnittskennung des ersten Streckenabschnitts aus der Zufahrtskennung und der Abfahrtskennung ermittelt sowie alle folgenden Streckenabschnittkennungen bis zur n-ten Streckenabschnittskennung des n-ten Streckenabschnitts.

Ein geschlossenes Mautsystem ist folglich ein Beispiel dafür, dass mehrere (in diesem Falle: zwei) erste Eigenpositionsinformationen erfasst werden müssen, um aus diesen beiden ersten Eigenpositionsinformationen eine erste Streckenabschnittskennung eines befahrenen Streckenabschnittes oder mehrere erste Streckenabschnitte mehrerer befahrener Streckenabschnitte zu ermitteln.

Allerdings kann der erste Streckenabschnitt, der unmittelbar und nächstliegend in Folge der Zufahrt befahren wurde, immer auch direkt aus der ermittelten Zufahrtskennung bestimmt werden.

Ebenso kann der letzte Streckenabschnitt, der unmittelbar und letztfolgend vor einer Abfahrt befahren wurde, immer auch direkt aus der ermittelten Abfahrtskennung bestimmt werden.

Insofern ist eine Eigenpositionsinformation, die repräsentativ ist für eine Zufahrt oder eine Abfahrt, erfindungsgemäß auch immer repräsentativ für wenigstens einen Streckenabschnitt.

Eine straßenseitige Anordnung von maschinenlesbaren Zeichen kann in einem offenen Mautsystem an, über oder auf der Straße eines jeden mautpflichtigen Streckenabschnittes eines mautpflichtigen Straßennetzes angeordnet sein und jeweils eine erste Eigenpositionsinformation bereitstellen, die den entsprechenden mautpflichtigen Streckenabschnitt repräsentiert.

Ein offenes Mautsystem ist folglich ein Beispiel dafür, dass es genügt, nur eine erste Eigenpositionsinformation zu erfassen, um aus dieser einen ersten Eigenpositionsinformation eine erste Streckenabschnittskennung eines befahrenen Streckenabschnittes zu ermitteln.

Offene und geschlossene Mautsysteme können zu einem hybriden Mautsystem aus offenen und geschlossenen Mautteilsystemen kombiniert sein.

Im Folgenden wird ohne Beschränkung der Allgemeinheit zur Wahrung der Übersichtlichkeit auf offene Mautsysteme Bezug genommen, soweit nicht ausdrücklich anders erwähnt. Da für offene Mautsysteme die Erfassung einer einzigen ersten Eigenpositionsinformation genügt, während für geschlossenes Mautsystem zwei erste Eigenpositionsinformationen nötig sind, lassen sich die folgenden Ausführungen zu offenen Mautsystemen auf geschlossene Mautsysteme übertragen, indem eine zweite Erfassung einer ersten Eigenpositionsinformation vorgesehen wird, aus der in Kombination mit der ersten Erfassung einer ersten Eigenpositionsinformation der oder die befahren Streckenabschnitte ermittelt werden.

Die straßenseitige Anordnung von maschinenlesbaren Zeichen kann in Form von Textzeichen vorliegen, deren Zahlen und/ oder Buchstaben als solche durch einen Prozessor des Mautsystems aus Bilddaten der Bildaufnahme einer straßenseitigen Anordnung von maschinenlesbaren Zeichen erkennbar und verarbeitbar sind.

Im Falle einer straßenseitigen Anordnung von maschinenlesbaren Zeichen in Form von Textzeichen ist vorgesehen, dass wenigstens ein Prozessor des Mautsystems konfiguriert ist, aus den Bilddaten der Bildaufnahme einer straßenseitigen Anordnung von maschinenlesbaren Zeichen mittels eines Programms zur Zeichenerkennung Zahlen und/ oder Buchstaben in den Bilddaten zu identifizieren und zu einem Text zu kombinieren, den das Mautsystem als eine Zufahrtskennung, eine Abfahrtskennung oder eine erste Streckenabschnittskennung interpretiert und verarbeiten kann. Die straßenseitige Anordnung von maschinenlesbaren Zeichen kann alternativ oder kumulativ in Form eines Strichcodes (z. B. Barcode) oder eines Punktcodes (z. B. QR-Code ®) vorliegen, deren Striche oder Punkte als solche durch einen Prozessor des Mautsystems aus Bilddaten der Bildaufnahme der maschinenlesbaren Zeichen erkennbar und verarbeitbar sind.

Für den Fall, dass die straßenseitige Anordnung von maschinenlesbaren Zeichen kann in Form eine Strichcodes (z. B. Barcode) oder eines Punkcodes (z. B. QR-Code ®) vorliegt, ist vorgesehen, dass wenigstens ein Prozessor des Mautsystems konfiguriert ist, aus den Bilddaten der Bildaufnahme einer straßenseitigen Anordnung von maschinenlesbaren Zeichen mittels eines Programms zur Code-Erkennung den Code zu erkennen und mittels eines Programms zur Decodierung den erkannten Code zu decodieren und aus dem erkannten Code eine Zufahrtskennung, eine Abfahrtskennung oder eine erste Streckenabschnittskennung zu ermitteln.

Erfindungsgemäß ist die erste Erfassungseinrichtung eine optische Erfassungseinrichtung, die ausgebildet ist, wenigstens ein Bild der straßenseitigen Anordnung von maschinenlesbaren Zeichen aufzunehmen und damit die erste Eigenpositionsinformation der straßenseitigen Anordnung von maschinenlesbaren Zeichen optisch zu erfassen.

Diese optische Erfassungseinrichtung umfasst vorzugsweise eine Kamera, die vorzugsweise ausgebildet ist, im Takt von einer Sekunde (1 Hz) bis zu 20 Millisekunden (50Hz) Bilder der Fahrzeugumgebung mit Belichtungszeiten von 250 Mikrosekunden bis 10 Millisekunden aufzunehmen. Dabei ist die Kamera vorzugweise so im Fahrzeug angeordnet und ausgebildet, dass die Kamera einen Fahrzeugumgebungsbereich erfasst, der bezüglich 0° Fahrtrichtung von - 15° links bis + 45° rechts und von -15° unten (erdwärts) bis +30° oben (himmelwärts) reicht. In diesem Winkelbereich ist vorzugsweise die straßenseitige Anordnung von maschinenlesbaren Zeichen angeordnet, wenn sich das Fahrzeug an einem Erfassungsort auf der Straße befindet, der für die optische Erfassung der straßenseitigen Anordnung von maschinenlesbaren Zeichen mittels der optischen Erfassungseinrichtung der Fahrzeugeinrichtung besonders günstig ist. Von der Fahrzeugeinrichtung, vorzugsweise von der optischen Erfassungseinrichtung, kann ein Prozessor umfasst sein, der ausgebildet ist, aus den aufgenommenen Bilddaten der straßenseitigen Anordnung von maschinenlesbaren Zeichen Zeichendaten oder Codedaten zu ermitteln, beispielsweise durch Ausführung eines Programms zur Zeichen- oder Code-Erkennung.

Alternativ oder kumulativ kann ein solcher Prozessor auch von einer zentralen Datenverarbeitungsanlage des Mautsystems umfasst sein, die die aufgenommenen Bilddaten von der Fahrzeugeinrichtung im Wege einer Mobilfunkkommunikation empfängt. In diesem Fall ist die Fahrzeugeinrichtung mit einer Mobilfunkkommunikationseinrichtung ausgerüstet, die die aufgenommenen Bilddaten an die zentrale Datenverarbeitungsanlage versendet.

Vorzugsweise umfasst das Mautsystem eine Datenbank mit Streckenabschnittskennungen von mautpflichtigen Streckenabschnitten und ist ausgebildet, zu prüfen, ob (i) die ermittelte Streckenabschnittskennung in der Datenbank enthalten ist, (ii) die ermittelte Streckenabschnittskennung in der Datenbank als mautpflichtig gekennzeichnet ist und/ oder (iii) für die ermittelte Streckenabschnittskennung unter der Fahrzeugkennung bereits eine Mautgebühr entrichtet wurde. Ergibt die Prüfung, dass (i) die ermittelte Streckenabschnittskennung in der Datenbank enthalten ist oder (ii) die ermittelte Streckenabschnittskennung in der Datenbank als mautpflichtig gekennzeichnet ist und gegebenenfalls (iii) für die ermittelte Streckenabschnittskennung unter der Fahrzeugkennung noch keine Mautgebühr entrichtet-sofern eine vorzeitige Entrichtung der Mautgebühr vor der Benutzung eines Streckenabschnitts überhaupt im Mautsystem vorgesehen ist-wurde, so wird erfindungsgemäß anhand wenigstens der ermittelten ersten Streckenabschnittskennung eine Mautgebühr für wenigstens den vom Fahrzeug befahrenen Streckenabschnitt bestimmt, der der ermittelten Streckenabschnittskennung entspricht.

Damit wird es möglich, aus generell jeder straßenseitigen Anordnung von maschinenlesbaren Zeichen, die von der optischen Erfassungseinrichtung der Fahrzeugeinrichtung erfasst wurde und die eine erste Eigenpositionsinformation bereitstellt, die repräsentativ ist für einen Streckenabschnitt, den das Fahrzeug befährt, ohne vorherige Kenntnis darüber, ob der betreffende Streckenabschnitt mautpflichtig ist oder nicht, eine erste Streckenabschnittskennung zu ermitteln, und diese erste Streckenabschnittskennung der besagten Prüfung zu unterwerfen, um eine Mautpflicht oder eine Mautfreiheit des betreffenden Streckenabschnitt festzustellen, und im Falle der feststellten Mautpflicht darüber hinausgehend zu prüfen, ob eine oder die passende Mautgebühr für den betreffenden Streckenabschnitt bereits entrichtet wurde, und im Falle der nicht bestehenden Entrichtung eine Mautgebühr für den betreffenden Streckenabschnitt zu bestimmen und in der Datenbank als fällige Zahlung zu speichern.

Mit der Erfindung wird eine optische Erfassungseinrichtung bereitgestellt, die eine zur üblichen GNSS-gestützten Erfassung von Eigenpositionsinformationen alternative Erfassung von Eigenpositionsinformationen ermöglicht, die jeweils repräsentativ sind für einen Streckenabschnitt, den das Fahrzeug befährt.

Damit kann in Fällen, in den der GNSS-Signal-Empfang ausbleibt, gestört oder von mangelnder Qualität ist, durch das erfindungsgemäße Mautsystem auf eine andere Erfassungseinrichtung zurückgegriffen werden.

Selbstverständlich kann die erfindungsgemäße Fahrzeugeinrichtung auch gänzlich ohne eine GNSS-gestützte Erfassungseinrichtung auskommen. Unter einer GNSS-gestützten Erfassungseinrichtung wird eine elektronische Erfassungseinrichtung verstanden, die eine Positionsbestimmungseinrichtung mit einem GNSS-Empfänger aufweist oder an eine solche Positionsbestimmungseinrichtung gekoppelt ist und dazu ausgebildet ist, die von der Positionsbestimmungseinrichtung aus den von dem GNSS-Empfänger empfangenen GNSS-Signalen gewonnene Eigenpositionsinformationen zu erfassen.

Einrichtungen der Koppelortung, die die aus den von dem GNSS-Empfänger empfangenen GNSS-Signalen gewonnenen Eigenpositionsinformationen zusammen mit den Weg-Informationen eines Odometers oder den Geschwindigkeitsinformationen eines Tachometers und der Fahrtrichtungswinkeländerungsinformation eines Gyroskops zu einer verbesserten Eigenpositionsinformation weiterverarbeiten, können sowohl als GNSS-gestützte Erfassungseinrichtungen als auch als Positionsbestimmungseinrichtungen angesehen werden.

Da in der Regel GNSS-Signale allgemeinhin verfügbar sind, kann das erfindungsgemäße Mautsystem und das erfindungsgemäße Mautverfahren auch nur als eine Sonderlösung für bestimmte Gebiete verwendet werden, in denen beispielsweise der GNSS-Empfang, das heißt der Empfang von Signalen von Satelliten des GNSS, durch die Fahrzeugeinrichtung nicht möglich ist (zum Beispiels in einem Tunnel) oder in denen die Positionsbestimmungsgenauigkeit des der GNSS-Signale und/ oder des GNSS-Empfängers nicht ausreicht, damit die elektronische Erfassungseinrichtung festzustellen kann, ob sich das Fahrzeug auf einem mautpflichtigen Streckenabschnitt oder einem in geringem Abstand (10 bis 100 m) parallel dazu befindlichen mautfreien Streckenabschnitt befindet.

Vorzugsweise ist das erfindungsgemäße Mautsystem demnach dadurch gekennzeichnet, dass die Fahrzeugeinrichtung wenigstens eine Positionsbestimmungseinrichtung mit wenigstens einem GNSS-Empfänger umfasst und das Mautsystem wenigstens eine zweite Erfassungseinrichtung aufweist, die eine elektronische Erfassungseinrichtung ist, welche ausgebildet ist, von durch die Positionsbestimmungseinrichtung bereitgestellten Fahrwegmesswerten, die wenigstens eine zweite Eigenpositionsinformation in Form von wenigstens einer geographischen Position umfassen, zu erfassen und das Mautsystem ferner ausgebildet ist, eine oder mehrere zweite Eigenpositionsinformationen und/ oder davon abgeleitete eine oder mehrere dritte Eigenpositionsinformationen mit einer oder mehreren im Mautsystem gespeicherten geographischen Referenzpositionsinformationen zu vergleichen, die mit einer zweiten Streckenabschnittskennung des befahrenen Streckenabschnitts verknüpft sind.

Im Falle einer hinreichenden Übereinstimmung der einen oder mehreren zweite Eigenpositionsinformationen und/ oder davon abgeleiteten einen oder mehreren dritte Eigenpositionsinformationen mit einer oder mehreren im Mautsystem gespeicherten geographischen Referenzpositionsinformationen ermittelt das Mautsystem insofern aus den von der Positionsbestimmungseinrichtung bereitgestellten Fahrwegmesswerten diese zweite Streckenabschnittskennung.

Zu den von der Positionsbestimmungseinrichtung bereitgestellten Fahrwegmesswerten zählen neben der wenigstens einen geographischen Position als zweite Eigenpositionsinformation typischerweise erste Fahrtrichtungsinformationen und erste Geschwindigkeitsinformationen. Zusätzlich zu den zweiten und/ oder dritten Eigenpositionsinformationen können auch diese ersten Fahrtrichtungsinformationen und/ oder aus den zweiten und/ oder dritten Eigenpositionsinformationen abgeleitete weitere Fahrtrichtungsinformationen von dem Mautsystem für einen Vergleich mit einer oder mehreren im Mautsystem gespeicherten geographischen Referenzpositionen und einer oder mehreren im Mautsystem gespeicherten Referenzfahrtrichtungen verwendet werden, um eine zweite Streckenabschnittskennung eines befahrenen Streckenabschnitts zu ermitteln.

Das Mautsystem, beispielsweise ein Prozessor der Fahrzeugeinrichtung (zum Beispiel ein Prozessor der elektronischen Erfassungseinrichtung) oder ein Prozessor einer zentralen Datenverarbeitungsanlage, die zweite oder dritte Eigenpositionen in Form von geographischen Positionen von der Fahrzeugeinrichtung beispielsweise im Wege einer Mobilfunkkommunikation empfangen hat, kann beispielsweise die geographischen Positionen mit Ortsdaten von Streckenabschnitten vergleichen, die in einer Datenbank gespeichert sind, und bei hinreichender Übereinstimmung der geographischen Positionen mit den Ortsdaten eines bestimmten Streckenabschnittes, die Streckenabschnittskennung dieses bestimmten Streckenabschnittes als diejenige ermitteln, dessen Streckenabschnitt durch das Fahrzeug befahren wurde.

Weitere Verfahren zur Ermittlung eines befahrenen Streckenabschnitts aus erfassten geographischen Positionen sind aus dem Stand der Technik bekannt.

Ein solches Mautsystem kann einerseits dahingehend weitergebildet sein, anhand von einer oder mehreren zweiten Eigenpositionsinformationen und/ oder einer oder mehreren davon abgeleiteten dritten Eigenpositionsinformationen die Anwesenheit des Fahrzeugs in einem bestimmten Gebiet, das den Streckenabschnitt zumindest teilweise und die erste Anordnung von maschinenlesbaren Zeichen vollständig aufweist, zu ermitteln, zu prüfen, ob (i) aus Fahrwegmesswerten aus dem bestimmten Gebiet die zweite Streckenabschnittskennung ermittelt werden konnte und (ii) aus von der optischen Erfassungseinrichtung im bestimmten Gebiet aufgenommenen Bildern die erste Streckenabschnittkennung ermittelt werden konnte, und im Falle einer im Zuge der Prüfung erfolgten Feststellung, (a) dass nur eine der ersten und zweiten Streckenabschnittskennung ermittelt werden konnte oder (b) die ermittelte erste und die ermittelte zweite Streckenabschnittskennung nicht identisch sind, eine Fehlermeldung zu erzeugen.

Andererseits kann ein solches Mautsystem dahingehend weitergebildet sein, einerseits die Korrektheit oder eine ausreichende Qualität von durch die Positionsbestimmungseinrichtung bereitgestellten geographischen Positionen und/ oder von durch den GNSS-Empfänger empfangenen GNSS-Signalen GNSS-positiv zu erkennen und im Falle einer solchen GNSS-Positiv-Erkennung die Mautgebühr für die Nutzung des entsprechenden Streckenabschnitts durch das Fahrzeug anhand der ermittelten zweiten Streckenabschnittskennung zu bestimmen, und andererseits das Ausbleiben von durch die Positionsbestimmungseinrichtung bereitzustellenden geographischen Positionen und/ oder von durch den GNSS-Empfänger zu empfangenden GNSS-Signalen oder (i) eine Fehlerhaftigkeit, (ii) eine mangelnde Qualität oder (iii) die Zugehörigkeit zu einen bestimmten Wertebereich wenigstens einer von der Positionsbestimmungseinrichtung bereitgestellten geographischen Position und/ oder von dem GNSS-Empfänger empfangenen Signalen GNSS-negativ zu erkennen, und im Fall einer solchen GNSS-Negativ-Erkennung die Mautgebühr für die Nutzung des entsprechenden Streckenabschnitts durch das Fahrzeug anhand der ermittelten ersten Streckenabschnittskennung zu bestimmen.

In diesem Fall ist es vorteilhaft, dass Mautsystem dahingehend auszubilden, dass es - insbesondere die Fahrzeugeinrichtung des Mautsystems - im Fall der GNSS-Positiv-Erkennung in einen Passivzustand wechselt, in dem (i) das Mautsystem - insbesondere die Fahrzeugeinrichtung des Mautsystems - keine von der optischen Erfassungseinrichtung aufgenommenen Bilder zur Ermittlung einer Streckenabschnittskennung verarbeitet oder (ii) die optischen Erfassungseinrichtung keine Bildaufnahmen durchführt, und im Fall der GNSS-Negativ-Erkennung in einen Aktivzustand wechselt, in dem (i) die optischen Erfassungseinrichtung Bildaufnahmen durchführt und (ii) das Mautsystem - insbesondere die Fahrzeugeinrichtung des Mautsystems - von der optischen Erfassungseinrichtung aufgenommene Bilder zur Ermittlung einer Streckenabschnittskennung verarbeitet.

Ein solches Mautsystem - insbesondere die Fahrzeugeinrichtung des Mautsystems - kann einerseits beispielsweise ausgebildet sein, im Passivmodus stets eine vorgegebene Anzahl (beispielsweise eintausend) von durch die optische Erfassungseinrichtung aufgenommenen Bildern zu speichern und das älteste Bild jeweils durch das neueste Bild zyklisch zu überschreiben, ohne die gespeicherten Bilder zur Ermittlung einer Streckenabschnittskennung zu verarbeiten, und im Aktivmodus die gespeicherten Bilder zur Ermittlung einer Streckenabschnittskennung zu verarbeiten.

Ein solches Mautsystem - insbesondere die Fahrzeugeinrichtung des Mautsystems - kann andererseits beispielsweise ausgebildet sein, generell von der optischen Erfassungseinrichtung aufgenommene Bilder zu verarbeiten und im Fall der GNSS-Positiv-Erkennung die optische Erfassungseinrichtung in einen Untätigkeitszustand zu versetzen, in dem sie keine Bildaufnahmen durchführt, so dass dem Mautsystem keine Bilder zur Verarbeitung mehr bereitgestellt werden, im Fall der GNSS-Negativ-Erkennung die optische Erfassungseinrichtung in einen Tätigkeitszustand zu versetzen, in dem sie Bildaufnahmen durchführt, wodurch dem Mautsystem - insbesondere der Fahrzeugeinrichtung des Mautsystems - wieder Bilder zur Verarbeitung bereitgestellt werden. Beispielsweise kann dieses Mautsystem - insbesondere die Fahrzeugeinrichtung des Mautsystems - ausgebildet sein, im Fall der GNSS-Positiv-Erkennung die optische Erfassungseinrichtung so zu deaktivieren, dass sie keine Bildaufnahmen durchführt und im Fall der GNSS-Negativ-Erkennung die optische Erfassungseinrichtung so zu aktivieren, dass sie Bildaufnahmen durchführt.

Ausgehend davon, dass das Mautsystem - insbesondere die Fahrzeugeinrichtung des Mautsystems - zunächst eine ausreichende Qualität von durch den GNSS-Empfänger empfangenen GNSS-Signalen GNSS-positiv erkennt und aus durch die Positionsbestimmungseinrichtung bereitgestellten geographischen Positionen Streckenabschnittskennung ermittelt, kann beispielsweise eine Fahrt in einen Tunnel durch das Ausbleiben von durch die Positionsbestimmung bereitzustellenden geographischen Positionen durch das Mautsystem, bevorzugt durch einen Prozessor der Fahrzeugeinrichtung (beispielsweise einen Prozessor der elektronischen Erfassungseinrichtung), negativ erkannt werden. Daraufhin aktiviert das Mautsystem, bevorzugt ein Prozessor der Fahrzeugeinrichtung oder der elektronischen Erfassungseinrichtung, die optische Erfassungseinrichtung zur Durchführung von Bildaufnahmen. Sofern im Tunnel Zufahrten und/ oder Abfahrten aufeinanderfolgen (zum Beispiel im City-Tunnel von Brüssel) können an den Zufahrten und Abfahrten und/ oder auf den Streckenabschnitten zwischen den Zufahrten und den Abfahrten Schilder an den Tunnelwänden und/ oder der an der Tunneldecke befestigt sein, die jeweils eine straßenseitige Anordnung von maschinenlesbaren Zeichen umfassen, mit der die erste Eigenpositionsinformation bereitgestellt wird, die repräsentativ ist für den befahrenen Streckenabschnitt.

Mit dem Wiedererlangen von GNSS-Signalen bei der Ausfahrt aus dem Tunnel stellt der GNSS-Empfänger wieder GNSS-Signale von ausreichender Qualität bereit. Dieser Umstand wird durch das Mautsystem, bevorzugt durch einen Prozessor der Fahrzeugeinrichtung (beispielsweise einen Prozessor der elektronischen Erfassungseinrichtung) positiv erkannt. Infolgedessen deaktiviert das Mautsystem, bevorzugt ein Prozessor der Fahrzeugeinrichtung oder der elektronischen Erfassungseinrichtung, die optische Erfassungseinrichtung zur Durchführung von Bildaufnahmen, so dass die optische Erfassungseinrichtung keine Bildaufnahmen mehr durchführt. Nun kann das Mautsystem Streckenabschnittskennungen wieder aus einer oder mehreren erfassten geographischen Positionen ermitteln.

Positive Erkennung und negative Erkennung müssen nicht von einem dezentralen Prozessor der Fahrzeugeinrichtung erfolgen. Sie können auch von einem zentralen Prozessor einer zentralen Datenverarbeitungseinrichtung erfolgen, an die die Fahrzeugeinrichtung mittels einer von der Fahrzeugeinrichtung umfassten Funkkommunikationseinrichtung - beispielsweise einer Mobilfunkkommunikationseinrichtung - regelmäßig (z. B. im zehn-Minuten-Takt) erfasste geographische Positionen in Positionsnachrichten , die danebst einen oder mehreren für die Qualität der erfassten geographischen Positionen maßgeblichen Parameter (beispielsweise DOP, dilution of precision, oder S/N, signal-to-noise ratio, oder Anzahl der sichtbaren GNSS-Satelliten) beinhalten, übermittelt. Das Ausbleiben eines Empfangs derartiger Positionsnachrichten kann von dem zentralen Prozessor ebenso als negativ erkannt werden wie die Zugehörigkeit der empfangenen geographischen Positionen zu einem bestimmten Wertebereich, der in der zentralen Datenverarbeitungseinrichtung gespeichert ist, auf kleinen Zeitskalen übermäßig variierende Werte von geographischen Position, ein großer DOP-Wert, ein geringer S/N-Wert und/ oder eine geringe Anzahl von sichtbaren GNSS-Satelliten. Das Wiedereinsetzen des Empfangs derartiger Positionsnachrichten kann von dem zentralen Prozessor als positiv erkannt werden.

Ausgehend davon, dass das Mautsystem zunächst eine ausreichende Qualität von durch die Positionsbestimmungseinrichtung bereitgestellten geographischen Positionen positiv erkennt und aus durch die Positionsbestimmungseinrichtung bereitgestellten geographischen Positionen Streckenabschnittskennung ermittelt, kann beispielsweise die Einfahrt in ein definiertes Gebiet negativ erkannt werden, in dem der GNSS-Empfang zwar mit ausreichender Qualität möglich ist, die durch die Positionsbestimmungseinrichtung in diesem Gebiet bereitgestellten geographischen Positionen und/ oder die Ortsdaten der mautpflichtigen und/ oder mautfreien Streckenabschnitte in diesem Gebiet jedoch nicht genau genug sind, um eine Differenzierung zwischen der Nutzung des mautpflichtigen Streckenabschnitts und des eng benachbarten mautfreien Streckenabschnitts wegen des Fehlers der geographischen Positionen und des Fehlers der Ortsdaten zu ermöglichen, wobei im Zuge der negativen Erkennung der von der Positionsbestimmungseinrichtung bereitgestellten geographischen Position oder Positionen als zugehörig zu einen bestimmten Wertebereich, nämlich zu Ortsdaten, die das besagte definierte Gebiet repräsentieren, erkannt wird. Beispielsweise kann das definierte Gebiet durch die Ortsdaten von vier Eckpositionen eines als Viereck ausgebildeten definierten Gebietes beschrieben sein und eine geographische Position, die in diesem Viereck liegt wird als zugehörig zum bestimmten Wertebereich von in diesem Viereck liegenden geographischen Positionen negativ erkannt.

Infolge der negativen Erkennung des Eintritts in ein solches definiertes Gebiet aktiviert das Mautsystem, bevorzugt ein Prozessor der Fahrzeugeinrichtung oder der elektronischen Erfassungseinrichtung, die optische Erfassungseinrichtung zur Durchführung von Bildaufnahmen und behält diese Aktivierung solange bei, bis der Austritt aus dem definierten Gebiet positiv dadurch erkannt wird, dass die Zugehörigkeit einer oder mehrerer von der Positionsbestimmungseinrichtung bereitgestellten geographischen Position(en) zu dem bestimmten Wertebereich, der durch das definierte Gebiet vorgegeben ist, nicht mehr gilt. In dem definierten Gebiet ist über dem mautpflichtigen Streckenabschnitt beispielsweise eine elektro-optische Anzeigevorrichtung installiert, die eine straßenseitige Anordnung von maschinenlesbaren Zeichen wiedergibt, die eine erste Eigenpositionsinformation bereitstellt, welche repräsentativ für den mautpflichtigen Streckenabschnitt ist, und die nur von den optischen Erfassungseinrichtung derjenigen Fahrzeuge erfasst werden kann, die sich auf dem mautpflichtigen Streckenabschnitt und nicht auf dem mautfreien Streckenabschnitt befinden.

Das kann beispielsweise dadurch realisiert werden, dass die elektro-optische Anzeigevorrichtung für optische Erfassungseinrichtungen von in Fahrtrichtung orientierten Fahrzeugen, die auf dem mautfreien Streckenabschnitt fahren, außerhalb des räumlichen Erfassungswinkelbereiches dieser optischen Erfassungseinrichtungen liegt, so dass die optischen Erfassungseinrichtungen von Fahrzeugen gar kein Bild von der straßenseitigen Anordnung von maschinenlesbaren Zeichen aufnehmen können (beziehungsweise Bildaufnahmen der optischen Erfassungseinrichtung die elektro-optische Anzeigevorrichtung nicht enthalten), unabhängig davon, wo sich das Fahrzeug auf dem mautfreien Streckenabschnitt befindet. Sollte in einem großen Abstand (beispielsweise von mehr als 200 m) zwischen Fahrzeug und elektro-optischer Anzeigevorrichtung die elektro-optische Anzeigevorrichtung in dem Erfassungswinkelbereich der optischen Erfassungseinrichtung befinden, so nimmt die aufgenommene straßenseitige Anordnung von maschinenlesbaren Zeichen einen derart kleinen Bereich in der Bildaufnahme ein, dass die Zeichen nicht mehr durch eine Software zur Erkennung von Zeichen aufgelöst werden können.

In einer alternativen Ausführungsform ist die elektro-optische Anzeigevorrichtung ausgebildet, die straßenseitige Anordnung maschinenlesbaren Zeichen in Abhängigkeit vom Winkel eines Betrachters wiederzugeben. Außerhalb eines Sichtbarkeitswinkelbereiches von +/- 20° gegenüber der Normalen der Anzeigefläche der elektro-optischen Anzeigevorrichtung sinkt beispielsweise der Kontrast der wiedergegebenen Zeichen und ist jenseits von +/- 30° so gering, dass eine Software zur Erkennung von Zeichen die wiedergegebenen Zeichen in der Bildaufnahme der optischen Erfassungseinrichtung nicht mehr identifizieren kann. Damit kann zwar die elektro-optische Anzeigevorrichtung in der Bildaufnahme enthalten sein, die unter einem Erfassungswinkel von 30° aufgenommen wurde, die straßenseitige Anordnung von maschinenlesbaren Zeichen ist jedoch in dieser Bildaufnahme zumindest nicht maschinenlesbar.

In der Regel wird eine Kombination dieser drei Varianten auftreten, die je nach Fahrzeugposition auf dem mautfreien Streckenabschnitt dazu führt, dass die straßenseitige Anordnung von maschinenlesbaren Zeichen nicht erfassbar oder nicht maschinenlesbar ist.

Verlässt das Fahrzeug das definierte Gebiet, was positiv dadurch erkannt wird, dass die Zugehörigkeit einer oder mehrerer von der Positionsbestimmungseinrichtung bereitgestellten geographischen Position(en) zu dem bestimmten Wertebereich, der durch das definierte Gebiet vorgegeben ist, nicht mehr gilt, so deaktiviert das Mautsystem, bevorzugt ein Prozessor der Fahrzeugeinrichtung oder der elektronischen Erfassungseinrichtung, die optische Erfassungseinrichtung zur Durchführung von Bildaufnahmen, so dass die optische Erfassungseinrichtung keine Bildaufnahmen mehr durchführt. Nun kann das Mautsystem Streckenabschnittskennungen wieder aus einer oder mehreren erfassten geographischen Positionen ermitteln.

Anstelle des definierten Gebietes, für das die Zugehörigkeit zu einem bestimmten Wertebereich der von der Positionsbestimmungseinrichtung bereitgestellten geographischen Positionen zu erkennen ist, kann auch die Zugehörigkeit von durch den GNSS-Empfänger empfangenen Signalen zu einem definierten Signal-Rauschverhältnis-Bereich oder einem bestimmter Signalpegelbereich zu erkennen sein, die maßgeblich sind für eine Störung des Empfangs von GNSS-Signalen (Jamming oder Spoofing), der den Empfang von GNSS-Signalen durch den GNSS-Empfänger stört und die korrekte Positionsbestimmung verhindert. Auch in einem solchen Störfall kann mit der Erfindung durch die erfindungsgemäße optische Erfassung von straßenseitige Anordnungen von maschinenlesbaren Zeichen, durch die erste Positionsinformationen bereitgestellt werden, zuverlässig die Streckenabschnittskennung des befahrenen Streckenabschnitts bestimmt werden.

Ausführungsformen des erfindungsgemäßen Mautsystems sehen vor, dass jeweils zusätzlich zu einer straßenseitigen Anordnung von maschinenlesbaren Zeichen wenigstens ein weiteres straßenseitiges maschinenlesbares graphisches Merkmal vorgesehen ist, das repräsentativ ist für einen Informationstyp, der mit der ersten Anordnung von maschinenlesbaren Zeichen bereitgestellt wird, und derart benachbart zu der straßenseitigen Anordnung von maschinenlesbaren Zeichen angeordnet ist, dass es zumindest abschnittsweise gemeinsam mit der straßenseitigen Anordnung von maschinenlesbaren Zeichen durch die optische Erfassungseinrichtung erfasst werden kann, und das Mautsystem - insbesondere die Fahrzeugeinrichtung des Mautsystems - ausgebildet ist, aus wenigstens einem von der optischen Erfassungseinrichtung aufgenommenen Bild von dem straßenseitigen maschinenlesbaren graphischen Merkmal den besagten Informationstyp des graphischen Merkmals zu ermitteln und nur in dem Fall, in dem der ermittelte Informationstyp einem vorbestimmten Informationstyp entspricht, Bilddaten der straßenseitigen Anordnung von maschinenlesbaren Zeichen zur Ermittlung der ersten Streckenabschnittskennung aus der ersten Eigenpositionsinformation der straßenseitigen Anordnung von maschinenlesbaren Zeichen bereitzustellen.

Dazu alternative Ausführungsformen des erfindungsgemäßen Mautsystems sehen vor, dass die straßenseitige Anordnung von maschinenlesbaren Zeichen einem bestimmbaren Muster und/ oder einem bestimmbaren Farbschema unterliegt, und die Fahrzeugeinrichtung ausgebildet ist, aus der von der optischen Erfassungseinrichtung aufgenommenen Bild von der straßenseitigen Anordnung von maschinenlesbaren Zeichen das besagte Muster und/ oder Farbschema zu bestimmen und nur in dem Fall, in dem das bestimmte Muster einem vorbestimmten Muster und/ oder das bestimmte Farbschema einem vorbestimmten Farbschema entspricht, Bilddaten der straßenseitigen Anordnung von maschinenlesbaren Zeichen zur Ermittlung der ersten Streckenabschnittskennung aus der ersten Eigenpositionsinformation der straßenseitigen Anordnung von maschinenlesbaren Zeichen bereitzustellen.

Mit beiden Ausführungsformen kann ein Versuch, aus beliebigen straßenseitigen Anordnungen von maschinenlesbaren Zeichen Streckenabschnittskennungen zu gewinnen, was bei straßenseitigen Anordnungen von maschinenlesbaren Zeichen, die keine erste Eigenpositionsinformationen, die einen mautpflichtigen Streckenabschnitt repräsentieren, bereitstellen, scheitern muss, rechtzeitig unterbunden werden, indem die Feststellung vorbestimmter graphischer Merkmale, Muster oder Farbschemata, die maßgeblich für eine erste Eigenpositionsinformation sind, die einen mautpflichtigen Streckenabschnitt repräsentieren, als Voraussetzung für diesen Versuch definiert wird.

Damit können einerseits unnötige Versuche, aus beliebigen straßenseitigen Anordnungen von maschinenlesbaren Zeichen Streckenabschnittskennungen zu gewinnen, vermieden werden.

Andererseits kann die Interpretation von straßenseitigen Anordnungen von maschinenlesbaren Zeichen als Streckenabschnittskennungen, die tatsächlich keine sind, dann wirksam mit dem Effekt der Verhinderung einer Fehl-Erhebung unterbunden werden, wenn nur straßenseitigen Anordnungen von maschinenlesbaren Zeichen als Streckenabschnittskennungen interpretiert werden, die mit einem vorbestimmten graphischen Merkmal verknüpft sind und/ oder einem Muster oder Farbschema unterliegen, das ein Indikator dafür ist, dass die straßenseitige Anordnungen von maschinenlesbaren Zeichen als Streckenabschnittskennung interpretiert werden darf.

Ein straßenseitiges maschinenlesbares graphisches Merkmal kann beispielsweise durch ein Verkehrszeichen bereitgestellt werden, das eine einzelne mautpflichtige Straße (z. B. Verkehrsschild des Richtzeichens Nr. 390 (Mautpflicht nach dem Bundesfernstraßenmautgesetz) oder Nr. 391 (Mautpflichtige Strecke) von Anlage Nr. 3 zu § 42 der deutschen Straßenverkehrsordnung (StVO)) oder eine Autobahn (z. B. Verkehrsschild des Richtzeichens Nr. 330.1 (Autobahn) an einer Zufahrt oder Nr. 330.2 (Ende der Autobahn) an einer Abfahrt von Anlage Nr. 3 zu § 42 StVO) kennzeichnet, wobei bei letzterem davon ausgegangen wird, dass das gesamte Autobahnnetz mautpflichtig ist.

Das bestimmbare Muster kann durch einen Schrifttyp der maschinenlesbaren Zeichen bereitgestellt werden, durch eine Anordnung der maschinenlesbaren Zeichen, durch eine Kombination von Buchstaben und Zahlen oder durch eine Anordnung von Referenzmerkmalen in einem Barcode oder in einem QR-Code ®.

Das bestimmbare Farbschema kann durch eine Schriftfarbe (beispielsweise weiß) und einem farbigen (beispielsweise blauen) Hintergrund oder durch verschiedene Farben der verschiedenen maschinenlesbaren Zeichen bereitgestellt werden.

So kann beispielsweise das durch eine Bildverarbeitungseinrichtung der Fahrzeugeinrichtung bestimmte Farbschema einer Bildaufnahme der Verkehrsschilder der Richtzeichen Nr. 405 (Nummernschild für Autobahnen) und Nr. 406 (Knotenpunkte der Autobahnen) von Anlage Nr. 3 zu § 42 StVO dem vorbestimmten Farbschema von weißen Zeichen auf blauem Grund entsprechen; und die Bilddaten der mit den Verkehrsschildern der Richtzeichen Nr. 405 und Nr. 406 bereitgestellte Anordnung von maschinenlesbaren Zeichen werden infolge der Feststellung der Übereinstimmung des bestimmten Farbschemas mit dem vorbestimmten Farbschema einer Zeichenerkennungsroutine der Bildverarbeitungseinrichtung unterworfen, die aus der mit der Kombination der Richtzeichen Nr. 405 und Nr. 406 bereitgestellten Eigenpositionsinformation (Knoten X der Autobahn Y) den Streckenabschnitt YX ermittelt, der auf dieser Autobahn Y dem Knoten X unmittelbar nachfolgt oder vorausgeht.

Derartige Streckenabschnittsinformationen können auch aus den Richtzeichen Nr. 448 (Ankündigungstafel auf Autobahnen) und Nr. 449 (Vorwegweiser auf Autobahnen) von Anlage Nr. 3 zu § 42 StVO gewonnen werden.

Es kann auch vorgesehen sein, dass sowohl jeweils zusätzlich zu einer straßenseitigen Anordnung von maschinenlesbaren Zeichen wenigstens ein weiteres straßenseitiges maschinenlesbares graphisches Merkmal vorgesehen ist, das repräsentativ ist für einen Informationstyp, der mit der ersten Anordnung von maschinenlesbaren Zeichen bereitgestellt wird, und derart benachbart zu der straßenseitigen Anordnung von maschinenlesbaren Zeichen angeordnet ist, dass es zumindest abschnittsweise gemeinsam mit der straßenseitigen Anordnung von maschinenlesbaren Zeichen durch die optische Erfassungseinrichtung erfasst werden kann, als auch die straßenseitige Anordnung von maschinenlesbaren Zeichen einem bestimmbaren Muster und/ oder einem bestimmbaren Farbschema unterliegt und das Mautsystem - insbesondere die Fahrzeugeinrichtung des Mautsystems - ausgebildet ist, sowohl aus einem von der optischen Erfassungseinrichtung aufgenommenen Bild von dem straßenseitigen maschinenlesbaren graphischen Merkmal den besagten Informationstyp des graphischen Merkmals zu ermitteln als auch aus der von der optischen Erfassungseinrichtung aufgenommenen Bild von der straßenseitigen Anordnung von maschinenlesbaren Zeichen das besagte Muster und/ oder Farbschema zu bestimmen und nur in dem Fall, in dem in dem sowohl der ermittelte Informationstyp einem vorbestimmten Informationstyp entspricht als auch das bestimmte Muster einem vorbestimmten Muster und/ oder das bestimmte Farbschema einem vorbestimmten Farbschema entspricht, Bilddaten der straßenseitigen Anordnung von maschinenlesbaren Zeichen zur Ermittlung der ersten Streckenabschnittskennung aus der ersten Eigenpositionsinformation der straßenseitigen Anordnung von maschinenlesbaren Zeichen bereitzustellen.

Damit können die Vorteile beider Verfahren gemeinsam genutzt werden, was die Wahrscheinlichkeit von Fehl-Erhebungen noch weiter verringert.

Gemäß einem zweiten Aspekt der Erfindung wird eine Fahrzeugeinrichtung zur Mitführung in oder an einem Fahrzeug bereitgestellt, die wenigstens eine erste Erfassungseinrichtung, die ausgebildet ist zur Erfassung von wenigstens einer ersten Eigenpositionsinformation, die repräsentativ ist für wenigstens einen Streckenabschnitt, den das Fahrzeug befährt, und wenigstens einen ersten Speicher umfasst, in dem zumindest zeitweilig wenigstens eine Fahrzeugkennung des Fahrzeugs gespeichert ist, und ausgebildet ist, aus wenigstens einer erfassten ersten Eigenpositionsinformation wenigstens eine erste Streckenabschnittskennung des befahrenen Streckenabschnitts zu ermitteln, anhand wenigstens der ersten ermittelten Streckenabschnittskennung eine Mautgebühr für die Nutzung wenigstens eines ersten, durch die ermittelte erste Streckenabschnittskennung bezeichneten, Streckenabschnitts durch das Fahrzeug zu bestimmen und die bestimmte Mautgebühr im ersten Speicher oder in einem zweiten Speicher der Fahrzeugeinrichtung abzuspeichern, dadurch gekennzeichnet, dass die erste Erfassungseinrichtung eine optische Erfassungseinrichtung ist, die ausgebildet ist, wenigstens ein Bild einer straßenseitigen Anordnung von maschinenlesbaren Zeichen aufzunehmen, mit der die erste Eigenpositionsinformation bereitgestellt wird, und damit die erste Eigenpositionsinformation der straßenseitigen Anordnung von maschinenlesbaren Zeichen optisch zu erfassen.

Der zweite Aspekt der Erfindung beschränkt die wesentlichen Merkmale des ersten Aspektes der Erfindung, die das erfindungsgemäße Mautsystem komponentenübergreifend erfasst, auf eine Fahrzeugeinrichtung mit den erfindungswesentlichen Merkmalen des erfindungsgemäßen Mautsystems.

Insbesondere ist dabei die Fahrzeugeinrichtung ausgebildet, von der optischen Erfassungseinrichtung aufgenommene Bilder zu verarbeiten, um in den Bildern allfällig enthaltene erste Eigenpositionsinformationen zu erfassen. Beispielsweise kann die Fahrzeugeinrichtung ausgebildet sein, Bilddaten von von der optischen Erfassungseinrichtung aufgenommenen Bildern zu verarbeiten, um erste Eigenpositionsinformationen in Form von Text (Zahlen oder Zeichen) oder in Form eines Codes (1-D-Bar-Code oder 2-D-Pixel-code) aus den Bilddaten zu gewinnen.

Vorzugsweise umfasst die erfindungsgemäße Fahrzeugeinrichtung eine Positionsbestimmungseinrichtung mit einem GNSS-Empfänger und eine zweite Erfassungseinrichtung, die eine elektronische Erfassungseinrichtung ist, welche ausgebildet ist, durch die Positionsbestimmungseinrichtung bereitgestellte Fahrwegmesswerte, die wenigstens eine zweite Eigenpositionsinformation in Form von wenigstens einer geographischen Position umfassen, zu erfassen, wobei die Fahrzeugeinrichtung ferner ausgebildet ist, eine oder mehrere zweite Eigenpositionsinformationen und/ oder davon abgeleitete eine oder mehrere dritte Eigenpositionsinformationen mit einer oder mehreren in der Fahrzeugeinrichtung gespeicherten geographischen Referenzpositionsinformationen zu vergleichen, die mit einer zweiten Streckenabschnittskennung des befahrenen Streckenabschnitts verknüpft sind.

Im Falle einer hinreichenden Übereinstimmung von die zweiten Eigenpositionsinformationen und/ oder davon abgeleiteten dritten Eigenpositionsinformationen mit einer oder mehreren im Mautsystem gespeicherten geographischen Referenzpositionsinformationen ermittelt die Fahrzeugeinrichtung insofern aus den von der Positionsbestimmungseinrichtung bereitgestellten Fahrwegmesswerten diese zweite Streckenabschnittskennung.

Dabei kann die Fahrzeugeinrichtung ausgebildet sein, einerseits die Korrektheit oder eine ausreichende Qualität von durch die Positionsbestimmungseinrichtung bereitgestellten geographischen Positionen und/ oder von durch den GNSS-Empfänger empfangenen GNSS-Signalen GNSS-positiv zu erkennen und im Falle einer solchen GNSS-Positiv-Erkennung die Mautgebühr für die Nutzung des entsprechenden Streckenabschnitts durch das Fahrzeug anhand der ermittelten zweiten Streckenabschnittskennung zu bestimmen, und andererseits das Ausbleiben von durch die Positionsbestimmungseinrichtung bereitzustellenden geographischen Positionen und/ oder von durch den GNSS-Empfänger zu empfangenden GNSS-Signalen oder (i) eine Fehlerhaftigkeit, (ii) eine mangelnde Qualität oder (iii) die Zugehörigkeit zu einen bestimmten Wertebereich wenigstens einer von der Positionsbestimmungseinrichtung bereitgestellten geographischen Position und/ oder von dem GNSS-Empfänger empfangenen Signalen GNSS-negativ zu erkennen, und im Fall einer solchen GNSS-Negativ-Erkennung die Mautgebühr für die Nutzung des entsprechenden Streckenabschnitts durch das Fahrzeug anhand der ermittelten ersten Streckenabschnittskennung zu bestimmen.

Eine solche Fahrzeugeinrichtung kann weitergebildet sein, im Fall der GNSS-Positiv-Erkennung die optische Erfassungseinrichtung in einen Untätigkeitszustand zu versetzen, in dem sie keine Bildaufnahmen durchführt, und im Fall der GNSS-Negativ-Erkennung die optische Erfassungseinrichtung in einen Tätigkeitszustand zu versetzen, in dem sie Bildaufnahmen durchführt.

Beispielsweise kann eine solche Fahrzeugeinrichtung ausgebildet sein, im Fall der GNSS-Positiv-Erkennung die erste Erfassungseinrichtung so zu deaktivieren, dass sie keine Bildaufnahmen durchführt und im Fall der GNSS-Negativ-Erkennung die erste Erfassungseinrichtung so zu aktivieren, dass sie Bildaufnahmen durchführt.

Gemäß einem dritten Aspekt der Erfindung wird ein Mauterhebungsverfahren bereitgestellt, das folgende Verfahrensschritte beinhaltet: (a) die Erfassung wenigstens einer ersten Eigenpositionsinformation, die repräsentativ ist für einen Streckenabschnitt, den ein Fahrzeug befährt, mittels wenigstens einer ersten Erfassungseinrichtung einer von einem Fahrzeug mitgeführten Fahrzeugeinrichtung, (b) die Ermittlung wenigstens einer ersten Streckenabschnittskennung aus wenigstens einer erfassten ersten Eigenpositionsinformation mittels einer Datenverarbeitungseinrichtung, (c) die Bestimmung einer Mautgebühr anhand wenigstens der ersten ermittelten Streckenabschnittskennung für die Nutzung wenigstens eines ersten, durch die ermittelte erste Streckenabschnittskennung bezeichneten, Streckenabschnitts durch das Fahrzeug mittels einer Datenverarbeitungseinrichtung und (d) die Speicherung der bestimmten Mautgebühr in wenigstens einem Speicher der Fahrzeugeinrichtung, in der eine Fahrzeugkennung des Fahrzeugs gespeichert ist, oder in wenigstens einem Speicher einer zentralen Datenverarbeitungsanlage, in der eine Fahrzeugkennung des Fahrzeugs gespeichert ist, mittels einer Datenverarbeitungseinrichtung, wobei das Mauterhebungsverfahren dadurch gekennzeichnet ist, dass die Erfassung eine optische Erfassung der ersten Eigenpositionsinformation in Form einer straßenseitigen Anordnung von maschinenlesbaren Zeichen ist, wobei die optische Erfassung die Aufnahme wenigstens eines Bildes der straßenseitigen Anordnung von maschinenlesbaren Zeichen umfasst.

Vorzugsweise ist die Streckenabschnittskennung in der ersten Eigenpositionsinformation codiert, und das erfindungsgemäße Mauterhebungsverfahren ist gekennzeichnet durch die Schritte (e) des Versendens der erfassten ersten Eigenpositionsinformation mittels einer Mobilfunkkommunikation von der Fahrzeugeinrichtung an eine zentrale Datenverarbeitungseinrichtung; (f) des Ermittelns der Streckenabschnittskennung aus der von der zentralen Datenverarbeitungseinrichtung empfangenen ersten Eigenpositionsinformation durch Decodieren der ersten Eigenpositionsinformation mittels der zentralen Datenverarbeitungseinrichtung und (g) des Versendens der ermittelten Streckenabschnittskennung mittels Mobilfunkkommunikation von der zentralen Datenverarbeitungseinrichtung an die Fahrzeugeinrichtung.

Dabei ist der Verfahrensschritt (e) des ersten Versendens zwischen dem Verfahrensschritt (a) der Erfassung und dem Verfahrensschritt (b) der Ermittlung angeordnet, der Verfahrensschritt (f) des Ermittelns in den Verfahrensschritt (b) der Ermittlung integriert und der Verfahrensschritt (g) des zweiten Versendens zwischen dem Verfahrensschritt (b) der Ermittlung und dem Verfahrensschritt (c) der Bestimmung angeordnet, der vorzugsweise durch die Fahrzeugeinrichtung durchgeführt wird.

Diese Weiterbildung des erfindungsgemäßen Verfahrens hat den Vorteil, dass der Code zum Decodieren der ersten Eigenpositionsinformation nicht auf der Fahrzeugeinrichtung gespeichert werden muss. Das erhöht die Sicherheit des erfindungsgemäßen Mauterhebungsverfahrens. Die Sicherheit kann weiter erhöht werden, indem die zentrale Datenverarbeitungseinrichtung die ermittelte Streckenabschnittskennung vor dem Verfahrensschritt (g) des zweiten Versendens mit einer digitalen Signatur versieht und digital signiert versendet. Kontrolleinrichtungen können über einen öffentlichen Schlüssel der digitalen Signatur verfügen und verifizieren, dass die Streckenabschnittskennung von der zentralen Datenverarbeitungseinrichtung erzeugt wurde. Fehlt der von der Fahrzeugeinrichtung an die Kontrolleinrichtung übermittelte Streckenabschnittskennung die digitale Signatur oder ist diese nicht korrekt, so lässt dies auf einen Fehler des Mautsystems oder eines seiner Beteiligten schließen.

Die besagte Weiterbildung kann darüber hinaus durch eine Anweisung zum Versenden der erfassten ersten Eigenpositionsinformation an die zentrale Datenverarbeitungseinrichtung gekennzeichnet sein, die von oder in Ergänzung zu der straßenseitigen Anordnung von maschinenlesbaren Zeichen maschinenlesbar bereitgestellt wird, und die Schritte der optischen Erfassung der Anweisung mittels der ersten Erfassungseinrichtung der Fahrzeugeinrichtung im Zuge der Aufnahme wenigstens eines Bildes der straßenseitigen Anordnung von maschinenlesbaren Zeichen und der Erkennung der Anweisung aus dem wenigstens einen aufgenommenen Bild durch die Fahrzeugeinrichtung umfasst.

Damit ließe sich das Mautsystem interoperabel ausführen: Es ließen sich für Streckenabschnitte unterschiedlicher Mautbetreiber mit einem einzigen Fahrzeuggerät die straßenseitigen Anordnungen von maschinenlesbaren Zeichen erfassen und sie zum Decodieren an denjenigen Mautbetreiber versenden, dessen Adresse (URL oder Mobilfunknummer) in der Anweisung enthalten ist.

Das erfindungsgemäße Mauterhebungsverfahren kann von einem Mauterhebungsverfahren umfasst sein, welches die Erfassung oder zumindest den Versuch der Erfassung von (i) durch eine mit einem GNSS-Empfänger ausgestattete Positionsbestimmungseinrichtung der Fahrzeugeinrichtung bereitgestellten geographischen Positionen oder (ii) durch den GNSS-Empfänger empfangenen Signalen mittels wenigstens einer zweiten Erfassungseinrichtung der Fahrzeugeinrichtung und die GNSS-Positiv-Erkennung der Korrektheit oder einer ausreichende Qualität von durch die Positionsbestimmungseinrichtung bereitgestellten geographischen Positionen und/ oder von durch den GNSS-Empfänger empfangenen GNSS-Signalen oder die GNSS-Negativ-Erkennung des Ausbleibens von durch die Positionsbestimmungseinrichtung bereitzustellenden geographischen Positionen und/ oder von durch den GNSS-Empfänger zu empfangenden GNSS-Signalen oder (i) einer Fehlerhaftigkeit, (ii) einer mangelnde Qualität oder (iii) der Zugehörigkeit zu einen bestimmten Wertebereich wenigstens einer von der Positionsbestimmungseinrichtung bereitgestellten geographischen Position und/ oder von dem GNSS-Empfänger empfangenen Signalen, wobei im Falle der GNSS-Positiv-Erkennung die folgenden Schritte durchgeführt werden: die Ermittlung einer GNSS-basierten Streckenabschnittskennung aus einer oder mehreren erfassten geographischen Positionen mittels einer Datenverarbeitungseinrichtung; die Bestimmung einer Mautgebühr anhand wenigstens der einen ermittelten GNSS-basierten Streckenabschnittskennung für die Nutzung wenigstens eines ersten, durch die ermittelte erste Streckenabschnittskennung bezeichneten, Streckenabschnitts durch das Fahrzeug mittels einer Datenverarbeitungseinrichtung; und die Zuordnung der bestimmten Mautgebühr zu wenigstens einer Fahrzeugkennung, die zumindest zeitweilig in einem Speicher der Fahrzeugeinrichtung gespeichert ist, mittels einer Datenverarbeitungseinrichtung; dadurch gekennzeichnet, dass im Falle der GNSS-Negativ- Erkennung das erfindungsgemäße Mauterhebungsverfahren durchgeführt wird.

Nachfolgend wird die Erfindung anhand von eines Ausführungsbeispiels näher erläutert. Dazu zeigen
- Fig. 1: eine schematische Darstellung einer erfindungsgemäßen Fahrzeugeinrichtung 10 mit seinen wesentlichen Komponenten,
- Fig. 2: eine schematische Darstellung eines erfindungsgemäßen Mautsystems
- Fig. 3: einen Kartenausschnitt mit einer mautpflichtigen Straße,
- Fig. 4: eine erste Variante einer straßenseitigen Anordnung von maschinenlesbaren Zeichen über einem ersten Streckenabschnitt der mautpflichtigen Straße
- Fig. 5: eine zweite Variante einer straßenseitigen Anordnung von maschinenlesbaren Zeichen auf einem zweiten Streckenabschnitt der mautpflichtigen Straße
- Fig. 6: eine dritte Variante einer straßenseitigen Anordnung von maschinenlesbaren Zeichen auf einem dritten Streckenabschnitt der mautpflichtigen Straße

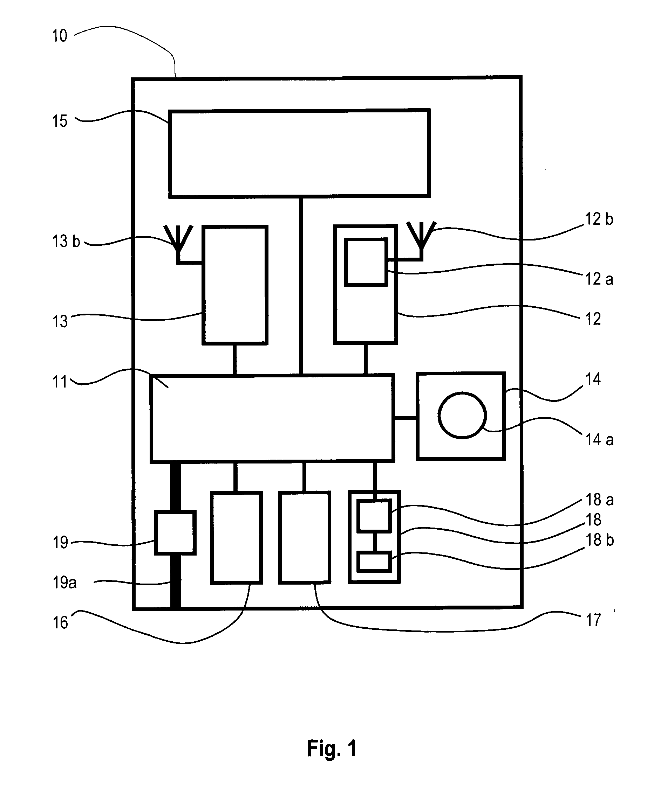

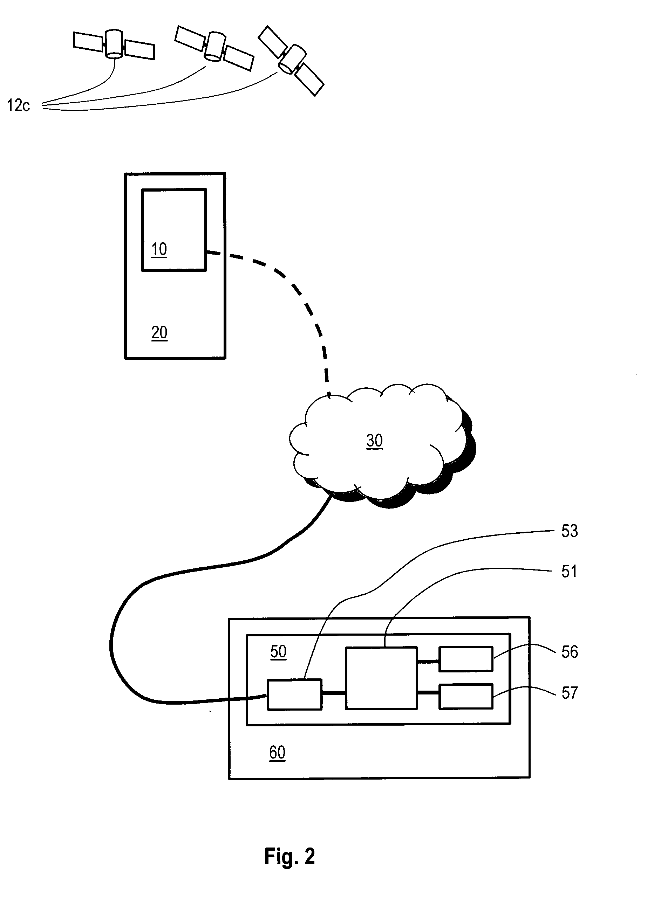

Eine als Fahrzeuggerät 10 ausgebildete Fahrzeugeinrichtung, die von einem Fahrzeug 20 (siehe Fig. 2) mitgeführt wird, ist schematisch in Fig. 1 dargestellt. Sie weist einen dezentralen Prozessor 11 auf, der kommunikativ gekoppelt ist an eine GNSS-Positionsbestimmungseinrichtung 12, die einen GNSS-Empfänger 12a mit einer GNSS-Empfangsantenne 12b umfasst, über die Signale von mehreren GNSS-Satelliten 12c (siehe Fig. 2) empfangen werden, aus welchen die GNSS-Positionsbestimmungseinrichtung 12 fortlaufend - vorzugsweise im Sekundentakt - die Position des GNSS-Empfängers zumindest näherungsweise zum Zeitpunkt des Empfangs der GNSS-Satelliten-Signale berechnet. Fakultativ ist die GNSS-Positionsbestimmungseinrichtung 12 kommunikativ an weitere (nicht dargestellte) Sensoren gekoppelt, beispielsweise einen Geschwindigkeitssensor eines Fahrzeugs (beispielsweise ein Tachometer) und einen Bewegungsrichtungsänderungssensor (beispielsweise ein Gyroskop). Messwerte dieser Sensoren kann die GNSS-Positionsbestimmungseinrichtung 12 im Verfahren der sogenannten Koppelortung mit den vom GNSS-Empfänger 12a gelieferten GNSS-Signalen zu wenigstens einer Koppelortungs-Position verarbeiten, die genauer ist als die GNSS-Position. Insbesondere im Falle zeitweise z. B. durch Abschattung ausbleibender GNSS-Positionen kann damit trotz weiterer Bewegung über eine begrenzte Strecke/ Zeit eine Position im Zuge des sogenannten "dead reckoning" ermittelt werden. Optional oder alternativ kann auch der dezentrale Prozessor 11 kommunikativ an besagte Sensoren und/ oder andere Sensoren gleichen Typs wie besagte Sensoren gekoppelt sein, und die Koppelortung unter Verwendung der von der GNSS-Positionsbestimmungseinrichtung 12 bereitgestellten GNSS- und/ oder Koppelortungs-Positionen durchführen oder verbessern.

Unabhängig von ihrem Erzeugungsweg werden die von dem dezentralen Prozessor 11 empfangenen oder erzeugten GNSS- und/ oder Koppelortungs-Positionsdaten verallgemeinert als geographische Positionsdaten einer geographischen Position bezeichnet. Diese geographische Position gilt unabhängig von allfälligen Positionsbestimmungsfehlern als Fahrzeugposition, weil die GNSS-Positionsbestimmungseinrichtung 12, dessen Position bestimmt wird, von einem Fahrzeug mitgeführt wird. Die geographischen Positionsdaten umfassen für jede geographische Position zumindest einen Longitudenwert (Längenkoordinatenwert) und einen Latitudenwert (Breitenkoordinatenwert). Damit ist die geographische Position des GNSS-Empfängers zumindest in der örtlich näherungsweise zwei-dimensionalen Ebene der Erdoberfläche im Rahmen der Genauigkeit des verwendeten Positionsbestimmungsverfahrens vorübergehend zumindest näherungsweise für den Zeitpunkt festgelegt, zu dem die GNSS-Signale empfangen wurden. Dieser Zeitpunkt kann durch das Zeitsignal, das im GNSS-Signal enthalten ist, oder durch das Zeitsignal einer Uhr (nicht dargestellt) - beispielsweise einer Funkuhr - die an den dezentralen Prozessor 11 gekoppelt ist, als Uhrzeit mit Datumsangabe ("Zeitstempel") spezifiziert werden und unter Bildung eines Positionsdatensatzes zu den geographischen Positionsdaten als ergänzende Information zu jeder geographischen Position hinzugefügt werden.

Zur Durchführung seiner Aufgaben wird auf dem Prozessor 11 ein Computerprogramm ausgeführt, welches zuvor in einem Daten-Schreib-Lese-Speicher 16 (beispielsweise ein EEPROM oder ein Flash-EEPROM) gespeichert wurde und durch das Betriebssystem des dezentralen Prozessors 11 zumindest abschnittsweise in den Arbeitsspeicher 17 (beispielsweise ein SDRAM) des dezentralen Prozessors 11 geladen wird, um für den dezentralen Prozessor 11 effizient verwendbar zu sein. Durch die Ausführung des Computerprogramms ist der dezentrale Prozessor 11 konfiguriert und mithin die dezentrale Datenverarbeitungseinrichtung DVD eingerichtet, erfindungsgemäße Verfahrensschritte durchzuführen. Der dezentrale Prozessor 11 ist an ein Sicherheitsmodul 18 gekoppelt, das als eigenständige Datenverarbeitungseinheit (beispielsweise eine Chipkarte) ausgebildet ist, die wenigstens ein autonomes Steuermodul 18a und einen Speicherbereich 18b aufweist, wobei das autonome Steuermodul 18a bevorzugt dazu konfiguriert ist, Anfragen nach einer Herausgabe von Daten aus dem Speicherbereich 18b und/oder der Änderung oder Aufnahme von Daten im Speicherbereich 18b nur gegen eine Authentifizierung auszuführen. Die Durchführung der Authentifizierungsprozedur kann durch die Analyse einer digitalen Signatur mittels eines vom Signierenden im Speicherbereich 18b des Sicherheitsmoduls 18 abgelegten öffentlichen Schlüssels erfolgen.

Anstelle des Sicherheitsmoduls 18 kann ein kryptographischer Datenspeicher (nicht dargestellt) vorgesehen sein, in den der Prozessor 11 Daten nur mit entsprechender Authentifizierung verschlüsselt ablegen kann und entschlüsselnd auslesen kann.

Die verschlüsselte Speicherung des Positionsdatensatzes im Speicherbereich 18b des Sicherheitsmoduls 18 oder im kryptographischen Datenspeicher kann mittels entsprechender Anweisungen, die durch den dezentralen Prozessor 11 durchgeführt werden.

Die Fahrzeugkennung des Fahrzeugs 20 ist in Form des Fahrzeugkennzeichens, das von wenigstens einem Fahrzeugschild des Fahrzeugs 20 umfasst ist, im Speicherbereich 18b des Sicherheitsmoduls 18 oder kryptographischen Datenspeichers gespeichert. Alternativ kann die Fahrzeugkennung in dem Daten-Schreib-Lese-Speicher 16 gespeichert sein.

Der dezentrale Prozessor 11 kann durch das Computerprogramm konfiguriert sein, aus einer oder mehreren erfassten geographischen Positionen wenigstens eine erste Streckenabschnittskennung eines befahrenen Streckenabschnitts 40 zu ermitteln.

Eine Anzeigeeinrichtung 15 kann Nachrichten des dezentralen Prozessors 11 in graphischer Form oder Textform wiedergeben. Eine nicht darstellte Eingabeeinrichtung (die auch von der Anzeigeeinrichtung 15 umfasst oder bereitgestellt sein kann) dient zur Aufnahme von Daten und Befehlen eines Nutzers an den dezentralen Prozessor.

Das Fahrzeuggerät umfasst ferner eine mit einem Kameraobjektiv 14a ausgerüstete Kamera 14 zur Aufnahme von Bildern der Umgebung des Fahrzeugs 20. Das Kameraobjektiv 14a bildet dabei einen Ausschnitt der Umgebung des Fahrzeugs auf einen Bildsensor (beispielsweise einen als CCD-Chip flächig ausgebildeten CCD-Sensor oder einen in CMOS-Technologie gefertigten Aktiv-Pixel-Sensor (APS), jeweils mit einem Feld lichtempfindlicher Fotodioden; nicht dargestellt) der Kamera 14 ab, der Lichtintensitäten in elektrische Signale umwandelt, die von einem Bildprozessor (ebenfalls nicht dargestellt) der Kamera 14 in Bilddaten umgewandelt werden und in einem Bilddatenspeicher (ebenfalls nicht dargestellt) der Kamera 14 zumindest zeitweise gespeichert werden. Über eine Schnittstelle zwischen dem dezentralen Prozessor 11 und dem Bildprozessor der Kamera können Bilddaten dem dezentralen Prozessor 11 zur Verarbeitung, insbesondere zur Zeichenerkennung, zur Verfügung gestellt werden.

Darüber hinaus umfasst das Fahrzeuggerät einen Mobilfunk-Sendeempfänger 13, beispielsweise in Form eines GSM-UMTS- oder LTE-Moduls, mit einer Mobilfunk-Antenne 13a. Der Mobilfunk-Sendeempfänger 13 wird durch den dezentralen Prozessor 11 angewiesen, durch das Fahrzeuggerät 10 erzeugte dezentrale Daten, beispielsweise Bilddaten der Kamera 14, einen Positionsdatensatz und/ oder eine oder mehrere durch den dezentralen Prozessor 11 ermittelte Streckenabschnittskennungen, (vorzugsweise in verschlüsselter Form) an eine Stelle zu senden, die der dezentrale Prozessor 11 vorgibt.

Unter Verweis auf Fig. 2 erfolgt die Versendung der dezentralen Daten über ein Mobilfunknetz 30 an eine Mautzentrale 60, die eine zentrale Datenverarbeitungseinrichtung 50 mit einer zentralen Kommunikationseinrichtung 53 zum Empfang des Positionsdatensatzes oder der Streckenabschnittskennung(en), einem zentralen Prozessor zur Verarbeitung des Positionsdatensatzes oder der Streckenabschnittskennung(en) sowie als Arbeitsspeicher einen ersten Datenspeicher 56 zur zumindest zeitweiligen Aufnahme der dezentralen Daten und als Daten-Schreib-Lese-Speicher eine zweiten Datenspeicher 57, beispielsweise in Form einer Festplatte, aufweist, in dem eine Fahrzeugkennung des Fahrzeugs 20 gespeichert in einer Datenbank über Fahrzeugkennungen gespeichert ist oder wird.

Der zentrale Prozessor verarbeitet die empfangenen dezentralen Daten zu wenigstens einem Datenverarbeitungsergebnis, beispielsweise einer Mautgebühr, und veranlasst die Speicherung des Datenverarbeitungsergebnisses zugeordnet zu der Fahrzeugkennung des Fahrzeugs 20 in dem zweiten Datenspeicher 57.

Im Fahrzeuggerät 10 versorgt eine wiederaufladbare Batterie 19 die genannten Komponenten des Fahrzeuggerätes 10 mit elektrischem Strom. Des weiteren ist ein Stromversorgungsanschluss 19a vorgesehen, über den die wiederaufladbare Batterie 19 wieder aufgeladen werden kann und/ oder die genannten Komponenten des Fahrzeuggerätes 10 unabhängig von der wiederaufladbaren Batterie 19 mit elektrischem Strom versorgt werden können.

Optional umfasst das Fahrzeuggerät 10 eine DSRC-Kommunikationseinrichtung (nicht dargestellt) zur DSRC-Kommunikation mit straßenseitigen Kontrolleinrichtungen (DSRC = dedicated short-range communication) und/ oder Schnittstellen (z. B. CAN, USB, bluetooth, W-LAN) zur kurzreichweitigen Kommunikation (ebenfalls nicht dargestellt) mit anderen im Fahrzeug mitgeführten Komponenten (ebenfalls nicht dargestellt), beispielsweise ein Mobiltelefon, eine elektronische Identifizierungskarte, ein Navigationssystem.

Anstelle des Fahrzeuggerätes 10 kann auch eine Fahrzeugeinrichtung mit über das Fahrzeug verteilten Komponenten des Fahrzeuggerätes 10 vorgesehen sein, die über Kommunikationsschnittstellen zumindest zeitweise wenigstens zur Übertragung von Daten mit zumindest dem dezentralen Prozessor 11 in Verbindung stehen.

Beispielsweise können - in nicht dargestellten alternativen Ausführungsvarianten - die Kamera 14, die GNSS-Positionsbestimmungseinrichtung 12 und/ oder der Mobilfunk-Sendeempfänger 13 außerhalb des Fahrzeuggerätes 10 fest im Fahrzeug 20 eingebaut sein, während das Fahrzeuggerät 10 ohne die Kamera 14, die GNSS-Positionsbestimmungseinrichtung 12 und/ oder der Mobilfunk-Sendeempfänger 13 zu umfassen fest im Fahrzeug 20, lösbar im oder am Fahrzeug 20 befestigt oder unbefestigt im Fahrzeug 20 angeordnet sein kann. In diesem Fall sind das Fahrzeuggerät 10 einerseits und die Kamera 14, die GNSS-Positionsbestimmungseinrichtung 12 und/ oder der Mobilfunk-Sendeempfänger 13 andererseits über eine Kommunikationsverbindung miteinander gekoppelt. Über eine solche Kommunikationsverbindung kann beispielsweise die Kamera 14 durch das Fahrzeuggerät 10 ein- und ausgeschaltet werden und/ oder zur Übertragung eines aufgenommen Bildes an das Fahrzeuggerät 10 aufgefordert werden. Die Kommunikationsverbindung kann durch eine Kabelverbindung (z. B. über den CAN-Bus des Fahrzeugs 20) oder drahtlos mit entsprechenden Sende- und -Empfangseinrichtungen in Fahrzeuggerät 10 und Kamera 14, GNSS-Positionsbestimmungseinrichtung 12 und/ oder Mobilfunk-Sendeempfänger 13 bereitgestellt sein.

Die Kamera 14 ist im Fahrzeug 20 derart angeordnet, dass sie Aufnahmen von Ausschnitten der Fahrzeugumgebung durchführen kann, in deren Bildfeld eine zur Fahrzeuglängsachse parallele, in Fahrtrichtung orientierte Richtungsachse weist; vorzugsweise ist die optische Achse des Kameraobjektivs 14a parallel zur Fahrzeuglängsachse. Die Kamera 14 ist derart ausgebildet, dass sie einen Ausschnitt der Fahrzeugumgebung von einem horizontalen Bildwinkel von wenigstens 65° parallel zur Straßenoberfläche und einem vertikalen Bildwinkel von wenigstens 45° senkrecht zur Straßenoberfläche aufnehmen kann. Damit ist gewährleistet, dass straßenseitige Anordnungen von maschinenlesbaren Zeichen durch die Kamera 14 optisch erfasst werden können, die über der Straße, auf der Straße und/ oder neben der Straße angeordnet sind.

Im Fall des vorliegenden Ausführungsbeispiels gemäß Fig. 1 kann das Fahrzeuggerät 10 fest im Fahrzeug 20 eingebaut sein, lösbar im oder am Fahrzeug 20 befestigt sein oder unbefestigt im Fahrzeug 20 angeordnet sein. Im ersten Fall kann das Fahrzeuggerät 10 von einem fahrzeugeigenen Navigationssystem umfasst oder bereitgestellt sein. Im zweiten Fall kann das Fahrzeuggerät 10 eine mobiles Fahrzeuggerät sein, das in mehreren verschiedenen Fahrzeugen, beispielsweise gemäß der Offenbarung der europäischen Patentanmeldung mit der Offenlegungsnummer EP 2 530 654 A1, zur Mauterhebung verwendet werden kann. Im dritten Fall kann das Fahrzeuggerät 10 durch ein Mobiltelefon bereitgestellt werden, welches die erfindungsgemäßen Merkmale aufweist, beispielsweise auch eine Kamera 14 zur Bildaufnahme von Ausschnitten der Fahrzeugumgebung.

Das Fahrzeuggerät 10 ist Teil eines Mautsystems, welches in Fig. 2 dargestellt ist und eine Mautzentrale 60 mit einer zentralen Datenverarbeitungseinrichtung 50 umfasst. Die zentrale Datenverarbeitungseinrichtung 50 weist einen zentralen Prozessor 51 auf, der mit einer zentralen Kommunikationseinrichtung 53, einem ersten zentralen Datenspeicher 56 und einem zweiten zentralen Datenspeicher 57 gekoppelt ist.

Das vom mautpflichtigen Fahrzeug 20 mitgeführte Fahrzeuggerät 10 empfängt GNSS-Signale von GNSS-Satelliten 12c eines GNSS-Systems, beispielsweise GPS, und bestimmt mittels seiner Positionsbestimmungseinrichtung 12 anhand dieser Signale im Sekundentakt seine eigene Position (Eigenposition) in Form von Eigenpositionsinformationen, die eine geographische Position mit Längen- und Breitenwerten (beispielsweise angegeben in Millibogensekunden) umfasst. Durch Vergleich einer oder mehrerer erfasster geographischer Positionen mit geographischen Objekten einer digitalen Datenbank, die jeweils mit wenigstens einer Kennung eines mautpflichtigen Streckenabschnitts verknüpft sind, ermittelt das Fahrzeuggerät 10 mittels seines dezentralen Prozessors 11 einen mautpflichtigen Streckenabschnitt, der durch das Fahrzeuggerät befahren wurde. Die Kennung des ermittelten mautpflichtigen Streckenabschnitts (Streckenabschnittskennung) wird zusammen mit einer Kennung des Fahrzeuggerätes 10 (beispielsweise eine Seriennummer des Fahrzeuggerätes) vom Fahrzeuggerät 10 mittels seines Mobilfunk-Sendeempfängers 13 über ein Kommunikationsnetz 30 an die Mautzentrale 60 übermittelt und von der zentralen Datenverarbeitungseinrichtung 50 mittels der zentralen Kommunikationseinrichtung 53 empfangen.

Mittels einer in dem ersten zentralen Datenspeicher 56 gespeicherten ersten Datenbank, in der Fahrzeuggerätekennungen jeweils verknüpft mit einem Fahrzeugkennzeichen abgelegt sind, nimmt der zentrale Prozessor 51 eine Zuordnung des empfangenen mautpflichtigen Streckenabschnitts zu dem Fahrzeugkennzeichen des Fahrzeugs 20 vor. Anhand der zusätzlich in der Datenbank zu dem Fahrzeugkennzeichen gespeicherten Fahrzeugparameter (zulässiges Gesamtgewicht, Achszahl, Schadstoffklasse usw.), den daraus ableitbaren Gebührenparametern und der in dem zweiten zentralen Datenspeicher 57 in einer zweiten Datenbank zu der Streckenabschnittskennung gespeicherten Länge des Streckenabschnittes bestimmt der zentrale Prozessor 51 eine Mautgebühr, die er zusammen mit der Streckenabschnittskennung in der ersten Datenbank mit dem Fahrzeugkennzeichen verknüpft und speichert.

Für den Fall einer Anfrage seitens einer Kontrolleinrichtung (nicht dargestellt), die straßenseitig ein Fahrzeug optisch erfasst und aus einer Bildaufnahme des Fahrzeugkennzeichen-Schildes durch Zeichenerkennung ein Fahrzeugkennzeichen ermittelt hat, an die zentrale Datenverarbeitungseinrichtung 50 nach einer Bestätigung über das Vorliegen einer Mautbuchung unter dem ermittelten Fahrzeugkennzeichen für den Streckenabschnitt, auf dem die Kontrolleinrichtung das Fahrzeug erfasst hat, kann der zentrale Prozessor 51 durch eine Abfrage an der ersten Datenbank ermitteln, ob unter dem Fahrzeugkennzeichen eine entsprechende Streckenabschnittskennung registriert ist.

In einer anderen Variante dieses Ausführungsbeispiels ist anstelle des zentralen Prozessors 51 der dezentrale Prozessor 11 ausgebildet, aus der ermittelten Streckenabschnittskennung eine Mautgebühr mit den dezentral im Fahrzeuggerät gespeicherten Gebührenparametern zu bestimmen und den Mobilfunk-Sendeempfänger 13 anzuweisen die bestimmte Mautgebühr zusammen mit einem im Sicherheitsmodul 18 des Fahrzeuggerätes 10 gespeicherten Fahrzeugkennzeichen an die zentrale Datenverarbeitungseinrichtung 50 zu übermitteln.

In einer noch anderen Variante dieses Ausführungsbeispiels ist anstelle des dezentralen Prozessors 11 der zentrale Prozessor 51 ausgebildet, durch Vergleich von einer oder mehreren, durch das Fahrzeuggerät 10 erfassten und mittels des Mobilfunk-Sendeempfängers 13 übermittelten geographischer Positionen mit geographischen Objekten einer digitalen Datenbank, die jeweils mit wenigstens einer Kennung eines mautpflichtigen Streckenabschnitts verknüpft sind, einen mautpflichtigen Streckenabschnitt, der durch das Fahrzeuggerät befahren wurde, zu ermitteln.

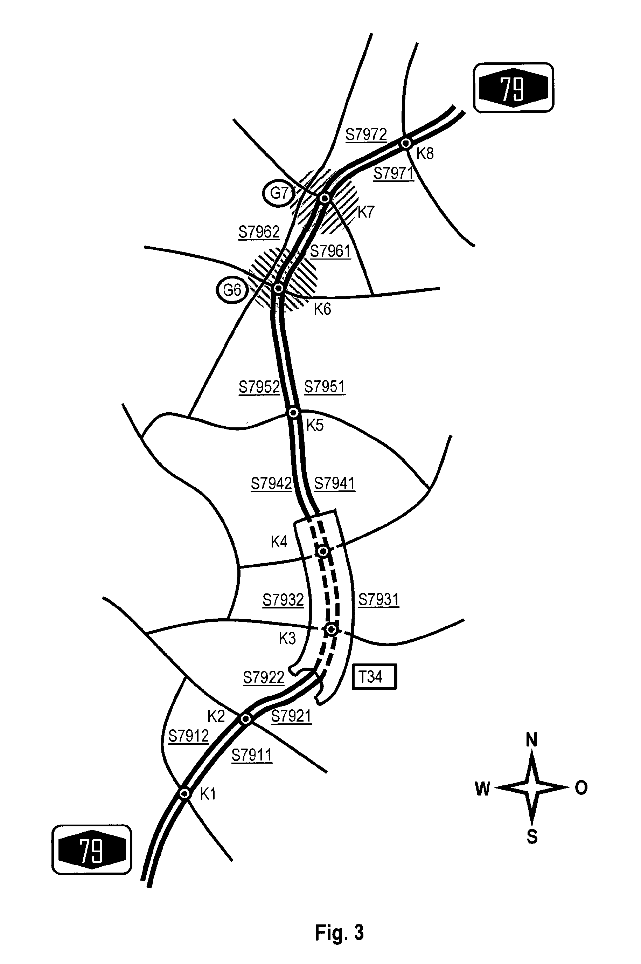

Fig. 3 zeigt einen Kartenausschnitt mehrerer mautpflichtiger Streckenabschnitte einer fiktiven Autobahn 79. Anhand einer Fahrt des Fahrzeugs 20 vom Knotenpunkt (Einfahrt/ Ausfahrt/ Durchfahrt) K1 bis zum Knotenpunkt (Einfahrt/ Ausfahrt/ Durchfahrt) K8 wird die verschiedenartige Funktionsweise des Fahrzeuggerätes 10 hinsichtlich der optischen Erfassung von straßenseitigen Anordnungen von maschinenlesbaren Zeichen, die eine Eigenpositionsinformation bereitstellen, welche repräsentativ für einen durch das Fahrzeug 20 befahrenen Streckenabschnitt ist, näher erläutert:

Auf der Fahrt von K1 nach K2 ermittelt das Fahrzeuggerät 10 anhand der durch die Positionsbestimmungseinrichtung bereitgestellten geographischen Positionen wie zuvor beschrieben den Streckenabschnitt S7911. Auf der Fahrt von K2 nach K3 ermittelt das Fahrzeuggerät in gleicher Weise den Streckenabschnitt S7921.

Auf dem Streckenabschnitt S7921 liegt die Einfahrt in einen Tunnel T34 der sich vollständig über den in Fahrtrichtung nächstfolgenden Streckenabschnitt S7931 und teilweise über den in Fahrtrichtung übernächst folgenden Streckenabschnitt S7941 erstreckt. An den im Tunnel T34 liegenden Knoten K3 und K4 kann das Fahrzeug 10 abfahren und wiederauffahren. Im Tunnel T34 kann das Fahrzeuggerät 10 keine GNSS-Signale empfangen. Die Positionsbestimmungseinrichtung 12 signalisiert nach der Einfahrt in den Tunnel T34 dem dezentralen Prozessor 11 das Ausbleiben von GNSS-Signalen.

Der dezentrale Prozessor 11 ist ausgebildet, in Antwort auf ein Fehlersignal der Positionsbestimmungseinrichtung 12 die Kamera 14 zu aktivieren, indem der Prozessor 11 ein Schaltsignal an einen elektronischen Schalter (nicht dargestellt) sendet, der in Antwort auf den Empfang des Schaltsignales in einen Schaltzustand wechselt, in dem die Kamera 14 mit elektrischen Strom versorgt wird. Die Kamera 14 ist ausgebildet, im aktivierten Betrieb mit 10 Hz (im 100-ms-Takt) Bilder von der Fahrzeugumgebung aufzunehmen.

Alternativ kann der dezentrale Prozessor ausgebildet sein, den Kameraprozessor der alternativ bereits durch das Aktivieren (Einschalten, mit Strom Versorgen) des Fahrzeuggeräts aktivierten Kamera 14 anweisen, die Kamera 14 aus einem Untätigkeitsmodus, in dem die Kamera 14 keine Bilder aufnimmt, in einen Tätigkeitsmodus zu versetzen, in dem die Kamera 14 mit 10 Hz Bilder von der Fahrzeugumgebung aufnimmt.

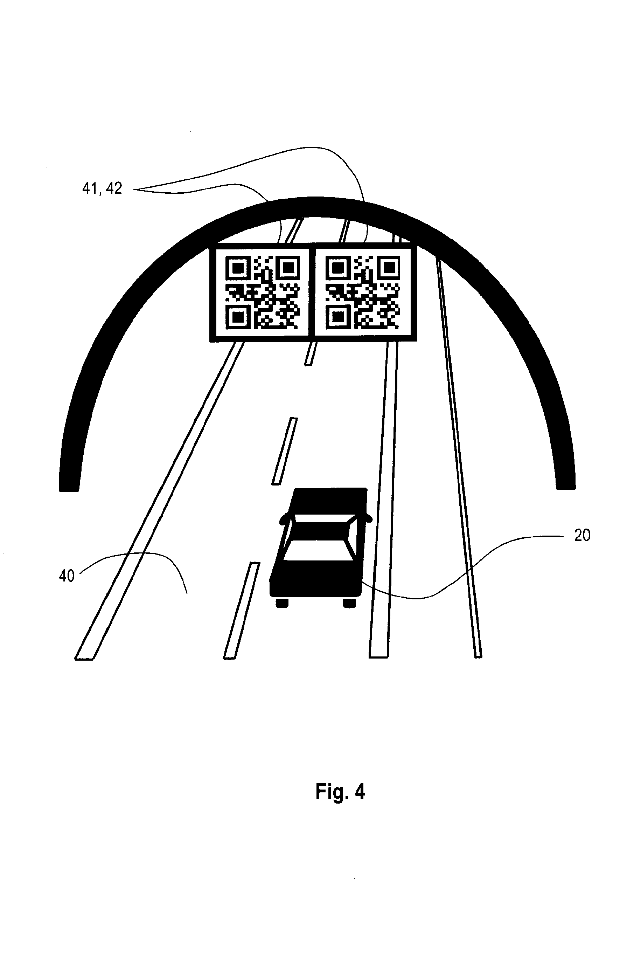

Zwischen den Knoten K3 und K4 sind, wie in Fig. 4 dargestellt, über der Fahrbahn des Streckenabschnitts 40 mit der Streckenabschnittskennung 7931 für jeden der zwei Fahrstreifen der Richtungsfahrbahn der Autobahn 79 nach Norden jeweils eine elektro-optische Anzeigevorrichtung 42 mit einem OLED-Bildschirm an der Tunneldecke des Tunnels befestigt. Durch jeden der beiden OLED-Bildschirme ist ein erster Typ einer straßenseitigen Anordnung von maschinenlesbaren Zeichen 41 in Form eines zweidimensionalen Punkt-Codes in Form eines QR-Codes ® wiedergegeben.

In einem Entfernungsbereich des Fahrzeugs 20 zu den elektro-optischen Anzeigevorrichtungen 42 von 100 m bis 20 m liegen einerseits die elektro-optischen Anzeigevorrichtungen 42 im Bilderfassungsbereich der Kamera 14 des Fahrzeuggerätes 10 und andererseits die Punkte des QR-Codes ® im Auflösungsbereich der Kamera 14.

Für jede der im Abstand von 100 ms Bildaufnahme der Kamera prüft der Kameraprozessor, ob sich in der Bildaufnahme ein QR-Code ® befindet. Dazu ist der Kameraprozessor ausgebildet, aus dem von der Kamera 14 aufgenommenen Bild ein einem QR-Code ® entsprechendes Muster zu ermitteln und nur in dem Fall, in dem ein solches Muster in dem aufgenommenen Bild ermittelt werden konnte, die Bilddaten des Bildes der straßenseitigen Anordnung von maschinenlesbaren Zeichen zur Ermittlung der ersten Streckenabschnittskennung der ersten Eigenpositionsinformation der straßenseitigen Anordnung von maschinenlesbaren Zeichen zu verwenden.

Ist dies der Fall, so dechiffriert der Kameraprozessor den QR-Code ® zu einer Eigenpositionsinformation "Abschnitt 7931" im Textformat, die er dem dezentralen Prozessor 11 des Fahrzeuggerätes 10 bereitstellt.

Der geneigte Leser mag mit seinem Smartphone ein Bild eines der in Fig. 4 dargestellten QR-Codes ® aufnehmen und diesen mittels der passenden Applikation entschlüsseln, um den vorgenannten Prozess nachzuvollziehen.

In einer anderen Variante dieses Ausführungsbeispiels stellt der Kameraprozessor die jeweiligen Bilddaten dem dezentralen Prozessor bereit, der anstelle des Kameraprozessors prüft, ob sich in der jeweiligen Bildaufnahme ein QR-Code ® befindet, um gegebenenfalls den QR-Code ® zu einer Eigenpositionsinformation "Abschnitt 7931" zu dechiffrieren.

In einer anderen Variante dieses Ausführungsbeispiels kann in dem QR-Code ® zusätzlich zu der Eigenpositionsinformation in Form der Streckenabschnittskennung eine Kommunikationsadresse (Telefonnummer oder Internetadresse (z. B. URL)) enthalten sein, an die das Fahrzeuggerät die ermittelte Eigenpositionsinformation zu übermitteln hat.

In diesem Ausführungsbeispiel ist die Kommunikationsadresse im Sicherheitsmodul 18 gespeichert und kann nicht durch Erkennung oder Dechiffrierung einer mit einer straßenseitig optisch erfassten Anordnung von maschinenlesbaren Zeichen bereitgestellten Kommunikationsadresse ersetzt werden.

Der dezentrale Prozessor 11 ist ausgebildet, die bereitgestellte Eigenpositionsinformation "Abschnitt 7931" auf die Bereitstellung eines identifizierenden Textbestandteils zu untersuchen, der maßgeblich dafür ist, dass die bereitgestellte Eigenpositionsinformation eine Streckenabschnittskennung bereitstellt und nicht etwa eine Kennung, die etwas anderes spezifiziert als den aktuell befahrenen Streckenabschnitt. In diesem Fall ist der identifizierende Textbestandteil "Abschnitt" der Textbestandteil der Eigenpositionsinformation, der spezifiziert, dass die in der Eigenpositionsinformation dem Textbestandteil "Abschnitt" unmittelbar die Streckenabschnittskennung des aktuell befahrenen Abschnitts folgt.

In einer anderen Variante dieses Ausführungsbeispiels kann der identifizierende Textbestandteil oder die gesamte Eigenpositionsinformation ein Chiffre sein, der mit einer im Sicherheitsmodul gespeicherten Dechiffrierfunktion entschlüsselt werden kann und im entschlüsselten Zustand einen vorgegebenen Text oder Wert annimmt, durch den die bereitgestellte Eigenpositionsinformation als mautrelevant identifiziert wird.

Anhand des Textbestandteils "Abschnitt" identifiziert der dezentrale Prozessor 11 die Zahlenkombination "7931" als Streckenabschnittskennung des Streckenabschnitts S7931 in Fig. 4. Der dezentrale Prozessor 11 weist den Mobilfunk-Sendeempfänger an, diese Streckenabschnittskennung zusammen mit einer im Sicherheitsmodul 18 gespeicherten Seriennummer des Fahrzeuggerätes 10 an die zentrale Datenverarbeitungseinrichtung 50 der Mautzentrale 60 zu senden. Die zentrale Datenverarbeitungseinrichtung 50 verarbeitet diese nutzerspezifische Streckenabschnittskennung analog zu dem im weiter oben beschrieben Fall, in dem die Streckenabschnittskennung aus geographischen Positionen ermittelt wurde, mit dem Ergebnis der Bestimmung einer Mautgebühr für die Benutzung des Streckenabschnitts S7931 durch das Fahrzeug 20.

Im weiteren Verlauf seiner Route verlässt das Fahrzeug 20 zwischen den Knoten K3 und K4 auf dem Streckenabschnitt S7941 den Tunnel, und die Positionsbestimmungseinrichtung 12 des Fahrzeuggeräts 10 empfängt daraufhin wieder

GNSS-Signale und stellt dem dezentralen Prozessor 11 erneut Eigenpositionsinformationen in Form von geographischen Positionen bereit. Der dezentrale Prozessor 11 ist ausgebildet, in Antwort die erneute Bereitstellung von geographischen Positionen die Kamera 14 zu deaktivieren, indem der Prozessor 11 ein Schaltsignal an den elektronischen Schalter (nicht dargestellt) sendet, der in Antwort auf den Empfang des Schaltsignales in einen Schaltzustand wechselt, in dem die Kamera 14 nicht elektrischen Strom versorgt wird.

Alternativ kann der dezentrale Prozessor ausgebildet sein, den Kameraprozessor der alternativ bereits durch das Aktivieren (Einschalten, mit Strom Versorgen) des Fahrzeuggeräts aktivierten Kamera 14 anweisen, die Kamera 14 aus einem Tätigkeitsmodus, in dem die Kamera 14 mit 10 Hz Bilder aufnimmt, in einen Untätigkeitsmodus zu versetzen, in dem die Kamera 14 keine Bilder von der Fahrzeugumgebung aufnimmt.

Anhand der erfassten geographischen Positionen erkennt das Fahrzeuggerät im weiteren Verlauf der Route, dass das Fahrzeug 20 die Streckenabschnitte S7941 und S7951 befährt.

Der um den Knoten K6 schraffierte kreisförmige Bereich G6 ist im Arbeitsspeicher als ein kreisförmiges geometrisches Objekt gespeichert zusammen mit einer Regel gespeichert, die lautet, den dezentralen Prozessor 11 anzuweisen, die Kamera 14 in einen Zustand zu versetzen, in dem sie mit 10Hz Bilder aufnimmt und in diesem Zustand zu halten, solange das Fahrzeug sich im schraffierten Bereich befindet.

Wie man der Fig. 3 entnimmt, befindet sich in nordwestlicher Richtung parallel zum mautpflichtigen Streckenabschnitt S7961 ein mautfreier Streckenabschnitt, der so nah an dem mautpflichtigen Streckenabschnitt S 7961 liegt, dass erfasste geographische Positionen nicht genau genug sind, um zwischen der Befahrung des mautpflichtigen Streckenabschnitts S7961'und des mautfreien Streckenabschnitts zu unterscheiden.

In diesem Fall wird also trotz erfasster, jedoch für eine sichere Bestimmung des befahrenen Streckenabschnitts nicht ausreichender, geographischer Positionen und fortgeführter Erfassung geographischer Positionen mittels der Kamera 14 nach einer zusätzlichen Eigenpositionsinformation in Form von straßenseitig angeordneten maschinenlesbaren Zeichen gesucht, aus der eine Streckenabschnittskennung ermittelbar ist.

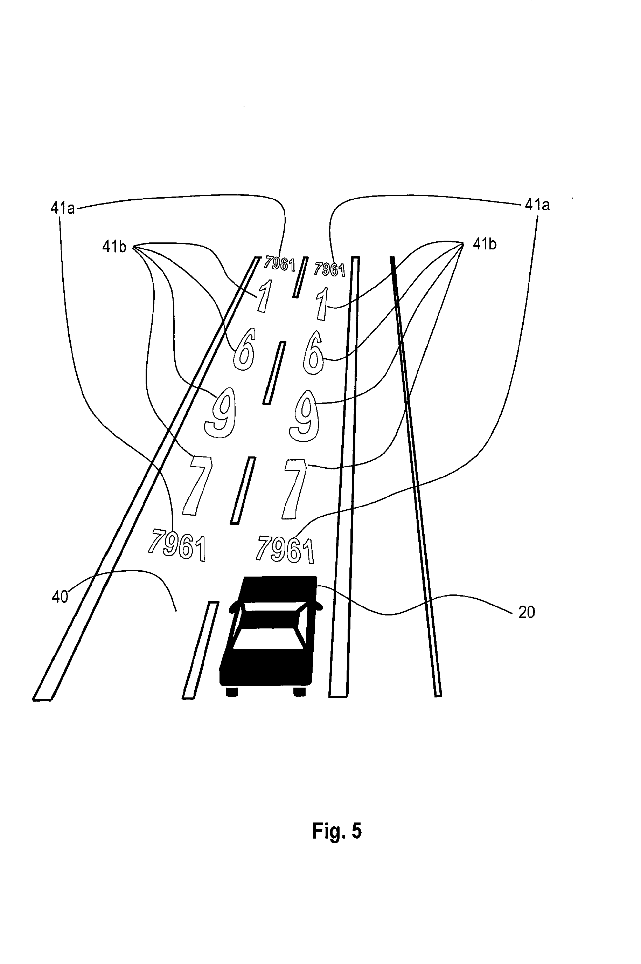

Straßenseitige Anordnungen 41a und 41b maschinenlesbarer Zeichen sind gemäß Fig. 5 in Form einzelner Zeichen, die jeweils von einer Schicht fluoreszierender Dispersionsfarbe gebildet werden, auf der Straßenoberfläche 40 bereitgestellt. In den Straßenbereich, der die straßenseitigen Anordnungen 41a und 41 b maschinenlesbarer Zeichen trägt, sind Heizelemente (nicht dargestellt) integriert, mit denen die Ablagerung von Schnee auf den straßenseitigen Anordnungen 41a und 41 b der maschinenlesbaren Zeichen verhindert wird.

Eine erste straßenseitige Anordnung 41a maschinenlesbarer Zeichen stellt auf jedem Fahrstreifen die vier Zahlen 7, 9, 6 und 1 bereit, die quer zur Fahrtrichtung über die Breite eines Fahrstreifens verteilt sind. Diese erste straßenseitige Anordnung 41a maschinenlesbarer Zeichen kann insbesondere bei niedriger Geschwindigkeit des Fahrzeugs 20 (1 km/h bis 20 km/h) von der Kamera 14 erfasst und die maschinenlesbaren Zeichen mittels eines Zeichenerkennungsprogramms aus den Bilddaten der Bildaufnahme durch den Kameraprozessor identifiziert werden. Bei sehr hoher Geschwindigkeit von mehr als 80 km/h besteht die Möglichkeit, dass eine Bildaufnahme der ersten straßenseitige Anordnung 41 a maschinenlesbarer Zeichen mangels Bildqualität nicht erfolgreich mittels des Zeichenerkennungsprogramms verarbeitet werden kann (zu kleine Abbildung weit entfernter Zeichen bei zu kleiner Bildauflösung oder zu große Verzerrung der Abbildung zu nah liegender Zeichen bei zu großer Belichtungszeit der Kamera).

Eine zweite erste straßenseitige Anordnung 41 b maschinenlesbarer Zeichen stellt auf jedem Fahrstreifen die vier Zahlen 7, 9, 6 und 1 bereit, die längs der Fahrtrichtung über eine Länge von etwa 15 m eines Fahrstreifens verteilt sind. Diese erste straßenseitige Anordnung 41a maschinenlesbarer Zeichen kann insbesondere bei hoher Geschwindigkeit des Fahrzeugs 20 (20 km/h bis 200 km/h) von der Kamera 14 erfasst und die maschinenlesbaren Zeichen mittels eines Zeichenerkennungsprogramms aus den Bilddaten der Bildaufnahme durch den Kameraprozessor identifiziert werden. Bei zu geringer Geschwindigkeit von unter 10 km/h besteht die Möglichkeit zu geringer Fahrzeugabstände im dichten Verkehr, die eine vollständige Erfassung eines Zeichens verhindert.

Die Fluoreszenz des Materials, aus dem die maschinenlesbaren Zeichen bestehen, bewirkt ein Eigenleuchten der maschinenlesbaren Zeichen in Antwort auf die Einstrahlung von Licht von Scheinwerfern des Fahrzeugs 20. Damit sind die maschinenlesbaren Zeichen 41a und 41b auch des nachts sichtbar, können von der Kamera 14 erfasst werden und mittels eines Programms zur Zeichenerkennung, das durch den Kameraprozessor ausgeführt wird, entsprechend als Zeichen erkannt werden.

Da die Aufnahmeperspektive für die Zeichen 41b ausgehend vom Fahrzeug 20 nicht senkrecht zur Straßenoberfläche (im 80° bis 100°-Winkel zur Straßenoberfläche) ist, sondern im Winkel von etwa 10° bis 20° liegt, sind die Zeichen 41b jeweils perspektivisch verzerrt: Sie sind jeweils abschnittsweise größer in ihrer Gesamtausdehnung und breiter in ihrer Strichstärke in einer Entfernung, die weiter von dem Fahrzeug entfernt liegt und kleiner in ihrer Gesamtausdehnung und schmaler in ihrer Strichstärke in einer Entfernung, die dichter am Fahrzeug liegt. Damit wird die optische Zeichenerkennung aus den Bilddaten durch einen Prozessor des Fahrzeuggerätes 10 erleichtert.

Während der Fahrt auf die straßenseitige Anordnungen 41a und 41b von maschinenlesbaren Zeichen zu und über die straßenseitige Anordnungen 41b von maschinenlesbaren Zeichen hinweg nimmt die Kamera alle 100ms ein Bild auf, das einen dem Fahrzeug vorausliegenden Bereich der Straßenoberfläche umfasst.

Der Frequenzbereich der Fluoreszenz des Materials, aus dem die maschinenlesbaren Zeichen bestehen, ist schmalbandig mit einer spektralen Breite von 30 nm FWHM und besitzt eine Mittenfrequenz von 610 nm.

Der Kameraprozessor ist ausgebildet, von mehreren, in ihrer Größe deutlich unterschiedlichen, in vollem Umfang erfassten Zeichen, nur das eine Zeichen zu erkennen, das deutlich größer als alle anderen Zeichen ist. Damit wird vermieden, dass das Zeichenerkennungsprogramm erfolglos versucht, von der straßenseitigen Anordnung 41 b Zeichen zu erkennen, die zu klein sind. Der Kameraprozessor ist ferner ausgebildet, eine Spektralanalyse der Farbe der Bilddaten des erkannten Zeichens (im Falle der straßenseitigen Anordnung 41 b) oder der erkannten Zeichen (im Falle der straßenseitigen Anordnung 41a) durchzuführen und das ermittelte Farbspektrum mit einem hinterlegten Farbspektrum zu vergleichen, um bei einer hinreichenden Übereinstimmung des ermittelten Farbspektrums mit dem hinterlegten Farbspektrum das jeweilige erkannte Zeichen beziehungsweise die jeweiligen erkannten Zeichen mit einem Zeitwert seiner/ ihrer Bildaufnahme an den dezentralen Prozessor 11 bereitzustellen. Der dezentrale Prozessor 11 ist ausgebildet, diese Zeichen von dem Kameraprozessor zu empfangen und im Falle mehrerer einzelner empfangener Zeichen aus der Folge der empfangenen Zeichen eine Zeichenfolge von verschiedenen Zeichen zu bilden. Zur Vermeidung von Ambivalenz kann der Zeichensatz so definiert sein, dass er keine zwei gleichen Zeichen in unmittelbarer Folge enthält. Der dezentrale Prozessor 11 interpretiert die bereitgestellte oder gebildete Zeichenfolge als Streckenabschnittskennung und weist den Mobilfunk-Sendeempfänger an, diese Streckenabschnittskennung zusammen mit Seriennummer des Fahrzeuggerätes 10 an die zentrale Datenverarbeitungseinrichtung 50 der Mautzentrale 60 zu senden. Die zentrale Datenverarbeitungseinrichtung 50 verarbeitet diese nutzerspezifische Streckenabschnittskennung analog zu dem im weiter oben beschrieben Fall mit dem Ergebnis der Bestimmung einer Mautgebühr für die Benutzung des Streckenabschnitts S7931 durch das Fahrzeug 20.

Mit auf den Straßenbelag aufgebrachten straßenseitigen Anordnungen 41a und 41b von maschinenlesbaren Zeichen wird somit auch im Falle eng benachbarter paralleler mautpflichtiger und mautfreier Streckenabschnitte die zuverlässige Erkennung der Befahrung eines mautpflichtigen Abschnittes gewährleistet und die Fehlerkennung der Befahrung des mautfreien Streckenabschnittes als Befahrung des mautpflichtigen Streckenabschnittes zuverlässig vermieden.

Während die Kamera zur Aufnahme von Bildern im 100ms-Takt betrieben wird, empfängt auch die Positionsbestimmungseinrichtung 12 des Fahrzeuggerätes 10 im Sekundentakt weiterhin geographische Positionen, die vom dezentralen Prozessor verarbeitet werden, indem sie daraufhin überprüft werden, ob sie noch innerhalb des kreisförmigen Bereichs G6 liegen oder bereits außerhalb. Liegt eine empfangene geographische Position außerhalb des kreisförmigen Bereichs, so deaktiviert der Prozessor in Antwort diese Feststellung die Kamera 14, indem der Prozessor 11 ein Schaltsignal an den elektronischen Schalter (nicht dargestellt) sendet, der in Antwort auf den Empfang des Schaltsignales in einen Schaltzustand wechselt, in dem die Kamera 14 nicht elektrischen Strom versorgt wird.

Alternativ kann der dezentrale Prozessor ausgebildet sein, den Kameraprozessor der alternativ bereits durch das Aktivieren (Einschalten, mit Strom Versorgen) des Fahrzeuggeräts aktivierten Kamera 14 anweisen, die Kamera 14 aus einem Tätigkeitsmodus, in dem die Kamera 14 mit 10 Hz Bilder aufnimmt, in einen Untätigkeitsmodus zu versetzen, in dem die Kamera 14 keine Bilder von der Fahrzeugumgebung aufnimmt.

Im weiteren Verlauf der Fahrt gelangt das Fahrzeug 20 gemäß Fig. 3 in den kreisförmigen Bereich G7 um den Knotenpunkt K7. Der kreisförmige Bereich G7 ist im Fahrzeuggerät 10 in Form von Ortsdaten des Kreismittelpunkts und eines Radius sowie sowohl einer ersten Anweisung gespeichert, im kreisförmigen Bereich durch die Positionsbestimmungseinrichtung 12 erfasste geographische Positionen und/ oder Fahrtrichtungswerte dahingehend auszuwerten, ob diese repräsentativ für die Befahrung des nachfolgenden Streckenabschnitts S7971 oder gegenüberliegenden Streckenabschnitts S7962 sind, als auch einer zweiten Anweisung, die Kamera 14 zur Aufnahme von Bildern im 100-ms-Takt zu aktivieren oder anzuweisen und von der Kamera 14 bereitgestellte Bildaufnahmen auf das Vorhandensein von straßenseitigen Anordnungen maschinenlesbarer Zeichen zu prüfen.

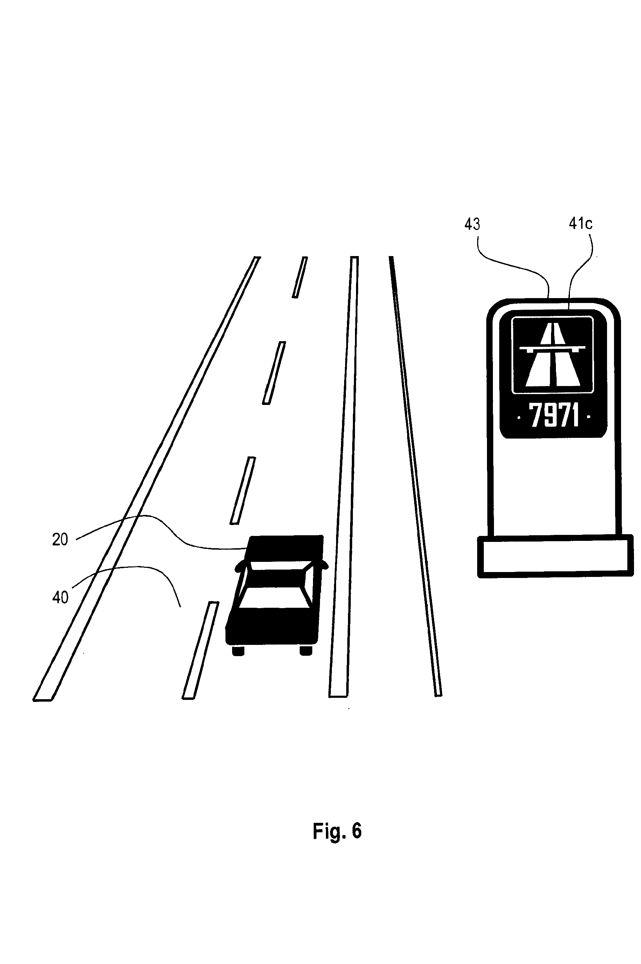

In diesem Fall wird im Gebiet des kreisförmigen Bereichs G7 gemäß Fig. 6 im Verlauf des Streckenabschnitts 40 die straßenseitige Anordnung 41c von maschinenlesbaren Zeichen in Form einer Verkehrsschildzeichenanordnung 41c durch eine Tafel 43 bereitgestellt, die das Autobahnsymbol des Richtzeichens Nr. 330.1 (Autobahn) von Anlage Nr. 3 zu § 42 StVO und die vierstellige Zahlenkombination 7971 umfasst.

Der dezentrale Prozessor 11 empfängt von der Kamera 14 Bildaufnahmen von der straßenseitigen Umgebung und untersucht diese in einem ersten Schritt auf das Vorhandensein des Richtzeichens Nr. 330.1. Kann der dezentrale Prozessor 11 dieses Richtzeichen nicht in der Bildaufnahme ermitteln, so verwirft er die Bildaufnahme und untersucht die nächste von der Kamera 14 bereitgestellte Bildaufnahme auf das Vorhandensein des Richtzeichens. Nur in dem Fall, in dem der dezentrale Prozessor 11 feststellt, dass dieses Richtzeichen in einer Bildaufnahme vorhanden ist, untersucht der dezentrale Prozessor die Bildaufnahme in einem zweiten Schritt auf das Vorhandensein eines vierstelligen Zahlencodes in einem bestimmten Bereich unterhalb des Autobahnsymbols. Kann der dezentrale Prozessor 11 einen solchen vierstelligen Zahlencode in dem bestimmten Bereich - zum Beispiel mit Hilfe eines Programms zur Erkennung von Zeichen in Bilddaten (OCR = optical character recognition) - ermitteln, so interpretiert er ihn als Streckenabschnittskennung des aktuell befahrenen Streckenabschnitts.

Der dezentrale Prozessor 11 ist nun weiterhin ausgebildet, anhand der im Bereich G7 erfassten geographischen Positionen und/ oder Fahrtrichtungswerte durch Vergleich mit im Datenspeicher 16 gespeicherten geographischen Referenzpositionen und/ oder Referenzfahrtrichtungswerten zu ermitteln, ob der Streckenabschnitt 7971 befahren wurde. Detektiert der dezentrale Prozessor 11 anhand der von der Positionsbestimmungseinrichtung bereitgestellten geographischen Positionen ein Verlassen des Gebietes G7, so weist er die Kamera 14 an, die Aufnahme von Bildern einzustellen, oder deaktiviert die Kamera 14.

Für den Fall, dass der dezentrale Prozessor 11 anhand der im Bereich G7 erfassten geographischen Positionen und/ oder Fahrtrichtungswerte die Befahrung des Streckenabschnitts 7971 und anhand der im Bereich G7 von der Kamera 14 erfassten Bilddaten die Befahrung des Streckenabschnittes 7971 feststellen konnte, erzeugt der dezentrale Prozessor 11 keine Fehlermeldung oder eine Erfolgsmeldung übereinstimmender Streckenabschnitts.

Für den Fall, dass der dezentrale Prozessor 11 anhand der im Bereich G7 erfassten geographischen Positionen und/ oder Fahrtrichtungswerte keine Befahrung eines Streckenabschnitts und anhand der im Bereich G7 von der Kamera 14 erfassten Bilddaten keine Befahrung eines Streckenabschnittes feststellen konnte, erzeugt der dezentrale Prozessor 11 keine Fehlermeldung oder eine Erfolgsmeldung übereinstimmend ausgebliebener Streckenabschnittsbestimmungen.

Für den Fall, dass der dezentrale Prozessor 11 anhand der im Bereich G7 erfassten geographischen Positionen und/ oder Fahrtrichtungswerte die Befahrung des Streckenabschnitts 7971 und anhand der im Bereich G7 von der Kamera 14 erfassten Bilddaten keine Befahrung des Streckenabschnittes 7971 (beispielsweise keine Befahrung eines mautpflichtigen Streckenabschnitts) feststellen konnte, erzeugt der dezentrale Prozessor 11 keine Erfolgsmeldung oder eine Fehlermeldung differierender Streckenabschnittskennungen.

Für den Fall, dass der dezentrale Prozessor 11 anhand der im Bereich G7 erfassten geographischen Positionen und/ oder Fahrtrichtungswerte keine Befahrung des Streckenabschnitts 7971 (beispielsweise keine Befahrung eines mautpflichtigen Streckenabschnitts) und anhand der im Bereich G7 von der Kamera 14 erfassten Bilddaten die Befahrung des Streckenabschnittes 7971 feststellen konnte, erzeugt der dezentrale Prozessor 11 keine Erfolgsmeldung oder eine Fehlermeldung differierender Streckenabschnittkennungen.

Damit kann die Qualität der auf geographischen Positionen und/ oder Fahrtrichtungswerten beruhenden Streckenabschnittsermittlung und/ oder die Gültigkeit der zu dieser Streckenabschnittsermittlung verwendeten, im Datenspeicher 16 vorrätigen, geographischen Referenzpositionen und/ oder Referenzfahrtrichtungswerten überprüft werden

Insbesondere ist der dezentrale Prozessor 11 ausgebildet, die im Bereich G7 erfassten geographischen Positionen und/ oder Fahrtrichtungswerte aufzuzeichnen und im Falle differierender Streckenabschnittskennungen den Mobilfunk-Sendeempfänger 13 anzuweisen, die aufgezeichneten geographischen Positionen und/ oder Fahrtrichtungswerte, vorzugsweise zusammen mit der Gebietskennung des Gebiets G7, vorzugsweise zusammen mit der ermittelten einzigen Streckenabschnittskennung oder den ermittelten differierenden Streckenabschnittskennungen, an eine bestimmte zentrale Datenverarbeitungseinrichtung zu senden, beispielsweise die zentrale Datenverarbeitungseinrichtung 50 der Mautzentrale 60.

Alternativ oder optional kann das Mautsystem an jedem Streckenabschnitt S7911 bis S7971 der Autobahn 79 straßenseitige Anordnungen von maschinenlesbaren Zeichen umfassen, die Eigenpositionsinformation in Form von QR-Codes ® 41 nach dem Beispiel der Fig. 4, in Form von auf die Straßenoberfläche aufgebrachten Zeichen 41a und 41 b nach dem Beispiel der Fig. 5 und/ oder in Form von Zeichen auf einer Tafel 43 nach dem Beispiel der Fig. 6 bereitstellen, welche repräsentativ für einen jeweils durch das Fahrzeug 20 befahrenen Streckenabschnitt 40 ist.

Der dezentrale Prozessor 11 ist ausgebildet, von der Positionsbestimmungseinrichtung empfangene geographische Positionen auf Fehlerhaftigkeit (z. B. starke örtliche Fluktuation der Werte) und mangelnde Qualität (geringes Signal-Rausch-Verhältnis, großer DOP-Wert) zu überprüfen.

Stellt der dezentrale Prozessor 11 eine Fehlerhaftigkeit oder eine mangelnde Qualität der empfangenen geographischen Positionen oder gar ein Ausbleiben von geographischen Positionen fest, so versetzt er die Kamera 14 durch ein entsprechendes Signal in einen Zustand, in dem sie mit 10Hz Bilder aufnimmt, und sich selbst in einen Zustand versetzt, in dem er von der Kamera 14 bereitgestellte Bilder oder bereitgestellte Zeichen empfängt und die bereitgestellten Bilder auf das Vorliegen von Zeichen prüft die Positionsinformationen entsprechen, die einen befahrenen Streckenabschnitt repräsentieren oder die bereitgestellten Zeichen daraufhin prüft, ob sie einen befahren Streckenabschnitt repräsentieren. Der dezentrale Prozessor ist ausgebildet sich selbst und die Kamera und in diesem Zustand zu halten, bis der dezentrale Prozessor wieder fehlerarme geographische Positionen von ausreichender Qualität erhält. In diesem Fall kann der dezentrale Prozessor die den Nachweis des Befahrens eines mautpflichtigen Streckenabschnitts wieder anhand der geographischen Positionen führen und weist die Kamera 14 durch ein entsprechendes Signal an die Aufnahme von Bildern einzustellen.

### Bezugszeichenliste

- 10: Fahrzeuggerät
- 11: dezentraler Prozessor
- 12: GNSS-Positionsbestimmungseinrichtung
- 12a: GNSS-Empfänger
- 12b: GNSS-Empfangsantenne
- 12c: GNSS-Satellit
- 13: Mobilfunk-Sendeempfänger (fahrzeugseitig)
- 13b: Mobilfunk-Antenne (fahrzeugseitig)
- 14: Kamera
- 14a: Kameraobjektiv
- 15: Anzeigeeinrichtung
- 16: Daten-Schreib-Lese-Speicher
- 17: Arbeitsspeicher
- 18: Sicherheitsmodul
- 19: Stromversorgungsanschluss
- 20: Fahrzeug
- 30: Kommunikationsnetz
- 31: Mobilfunk-Basisstation
- 40: Streckenabschnitt, Straße, Straßenoberfläche
- 41, 41a, 41b, 41c: straßenseitige Anordnung von maschinenlesbaren Zeichen
- 42: elektro-optische Anzeigevorrichtung
- 43: Tafel, Verkehrsschild
- 50: zentrale Datenverarbeitungseinrichtung
- 51: zentraler Prozessor
- 53: zentrale Kommunikationseinrichtung
- 56: erster zentraler Datenspeicher
- 57: zweiter zentraler Datenspeicher
- 60: Mautzentrale

## Patentansprüche

1. Mautsystem, das
- wenigstens eine von einem Fahrzeug (20) mitgeführte Fahrzeugeinrichtung (10) mit
- wenigstens einer ersten Erfassungseinrichtung, die ausgebildet ist zur Erfassung von wenigstens einer ersten Eigenpositionsinformation, die repräsentativ ist für wenigstens einen Streckenabschnitt (40), den das Fahrzeug (20) befährt,
und
- wenigstens einen ersten Speicher (17, 18b, 56), in dem zumindest zeitweilig wenigstens eine Fahrzeugkennung des Fahrzeugs (20) gespeichert ist,
umfasst und ausgebildet ist,
- aus wenigstens einer erfassten ersten Eigenpositionsinformation wenigstens eine erste Streckenabschnittskennung des befahrenen Streckenabschnitts (40) zu ermitteln,
- anhand wenigstens der ermittelten ersten Streckenabschnittskennung eine Mautgebühr für wenigstens den vom Fahrzeug (20) befahrenen Streckenabschnitt (40) zu bestimmen, der der ermittelten Streckenabschnittskennung entspricht, und
- die bestimmte Mautgebühr im ersten Speicher (17, 18b, 56) und/ oder in wenigstens einem zweiten Speicher (16, 56, 57) des Mautsystems zu speichern,
**dadurch gekennzeichnet, dass**
das Mautsystem ferner
- wenigstens eine straßenseitige Anordnung von maschinenlesbaren Zeichen (41, 41a, 41 b, 41c) umfasst, mit der
die erste Eigenpositionsinformation bereitgestellt wird,
und
- die erste Erfassungseinrichtung eine optische Erfassungseinrichtung (14) ist, die ausgebildet ist,
- wenigstens ein Bild der straßenseitigen Anordnung von maschinenlesbaren Zeichen (41, 41 a, 41 b, 41 c) aufzunehmen und
- damit die erste Eigenpositionsinformation der straßenseitigen Anordnung von maschinenlesbaren Zeichen (41, 41a, 41b, 41c) optisch zu erfassen.

2. Mautsystem nach Anspruch 1 **dadurch gekennzeichnet, dass**
- die Fahrzeugeinrichtung wenigstens eine Positionsbestimmungseinrichtung (12) mit wenigstens einem GNSS-Empfänger (12a) umfasst und
- das Mautsystem wenigstens eine zweite Erfassungseinrichtung aufweist, die eine elektronische Erfassungseinrichtung (11, 51) ist, welche ausgebildet ist, von durch die Positionsbestimmungseinrichtung (12) bereitgestellten Fahrwegmesswerten, die wenigstens eine zweite Eigenpositionsinformation in Form von wenigstens einer geographischen Position umfassen, zu erfassen
und
das Mautsystem ferner ausgebildet ist, eine oder mehrere zweite Eigenpositionsinformationen und/ oder davon abgeleitete eine oder mehrere dritte Eigenpositionsinformationen mit einer oder mehreren im Mautsystem gespeicherten geographischen Referenzpositionsinformationen zu vergleichen, die mit wenigstens einer zweiten Streckenabschnittskennung des befahrenen Streckenabschnitts (40) verknüpft sind.

3. Mautsystem nach Anspruch 2 **dadurch gekennzeichnet dass**
das Mautsystem ausgebildet ist,
anhand der zweiten Eigenpositionsinformationen und/ oder davon abgeleiteten dritte Eigenpositionsinformationen die Anwesenheit des Fahrzeugs (20) in einem bestimmten Gebiet (G7), das den Streckenabschnitt (40) zumindest teilweise und die erste Anordnung von maschinenlesbaren Zeichen (41, 41a, 41b, 41c) aufweist, zu ermitteln,
zu prüfen, ob
(i) aus Fahrwegmesswerten aus dem bestimmten Gebiet (G7) die zweite Streckenabschnittskennung ermittelt werden konnte und
(ii) aus von der optischen Erfassungseinrichtung (14) im bestimmten Gebiet (G7) aufgenommenen Bildern die erste Streckenabschnittkennung ermittelt werden konnte,
und im Falle einer im Zuge der Prüfung erfolgten Feststellung,
(a) dass nur eine der ersten und zweiten Streckenabschnittskennung ermittelt werden konnte oder
(b) die ermittelte erste und die ermittelte zweite Streckenabschnittskennung nicht identisch sind,
eine Fehlermeldung zu erzeugen.

4. Mautsystem nach Anspruch 2 **dadurch gekennzeichnet, dass**
Mautsystem ausgebildet ist,
- einerseits die Korrektheit oder eine ausreichende Qualität von durch die Positionsbestimmungseinrichtung (12) bereitgestellten geographischen Positionen und/ oder von durch den GNSS-Empfänger (12a) empfangenen GNSS-Signalen GNSS-positiv zu erkennen
und im Falle einer solchen GNSS-Positiv-Erkennung
die Mautgebühr für die Nutzung des entsprechenden Streckenabschnitts durch das Fahrzeug anhand der ermittelten zweiten Streckenabschnittskennung zu bestimmen,
und
- andererseits
das Ausbleiben von durch die Positionsbestimmungseinrichtung (12) bereitzustellenden geographischen Positionen und/ oder von durch den GNSS-Empfänger (12a) zu empfangenden GNSS-Signalen
oder
i) eine Fehlerhaftigkeit,
ii) eine mangelnde Qualität oder
iii) die Zugehörigkeit zu einen bestimmten Wertebereich
wenigstens einer von der Positionsbestimmungseinrichtung (12) bereitgestellten geographischen Position und/ oder von dem GNSS-Empfänger (12a) empfangenen Signalen GNSS-negativ zu erkennen,
und
- im Fall einer solchen GNSS-Negativ-Erkennung die Mautgebühr für die Nutzung des entsprechenden Streckenabschnitts durch das Fahrzeug anhand der ermittelten ersten Streckenabschnittskennung zu bestimmen.

5. Mautsystem nach Anspruch 4 **dadurch gekennzeichnet, dass**
Mautsystem ausgebildet ist,
- im Fall der GNSS-Positiv-Erkennung in einen Passivzustand zu wechseln, in dem
(i) das Mautsystem keine von der optischen Erfassungseinrichtung (14) aufgenommenen Bilder zur Ermittlung einer Streckenabschnittskennung verarbeitet
oder
(ii) die optischen Erfassungseinrichtung (14) keine Bildaufnahmen durchführt,
und
- im Fall der GNSS-Negativ-Erkennung in einen Aktivzustand zu wechseln, in dem
(i) die optischen Erfassungseinrichtung (14) Bildaufnahmen durchführt
und
(ii) das Mautsystem von der optischen Erfassungseinrichtung (14) aufgenommene Bilder zur Ermittlung einer Streckenabschnittskennung verarbeitet.

6. Mautsystem nach einem der vorhergehenden Ansprüche **dadurch gekennzeichnet, dass** jeweils zusätzlich zu einer straßenseitigen Anordnung von maschinenlesbaren Zeichen wenigstens ein weiteres straßenseitiges maschinenlesbares graphisches Merkmal vorgesehen ist, das
- repräsentativ ist für einen Informationstyp, der mit der ersten Anordnung von maschinenlesbaren Zeichen bereitgestellt wird, und
- derart benachbart zu der straßenseitigen Anordnung von maschinenlesbaren Zeichen angeordnet ist, dass es zumindest abschnittsweise gemeinsam mit der straßenseitigen Anordnung von maschinenlesbaren Zeichen durch die optische Erfassungseinrichtung erfasst werden kann,
und das Mautsystem ausgebildet ist,
- aus wenigstens einem von der optischen Erfassungseinrichtung aufgenommenen Bild von dem straßenseitigen maschinenlesbaren graphischen Merkmal den besagten Informationstyp des graphischen Merkmals zu ermitteln und
- nur in dem Fall, in dem der ermittelte Informationstyp einem vorbestimmten Informationstyp entspricht, Bilddaten der straßenseitigen Anordnung von maschinenlesbaren Zeichen zur Ermittlung der ersten Streckenabschnittskennung aus der ersten Eigenpositionsinformation der straßenseitigen Anordnung von maschinenlesbaren Zeichen bereitzustellen.

7. Mautsystem nach einem der Ansprüche 1 bis 5 **dadurch gekennzeichnet, dass**
- die straßenseitige Anordnung von maschinenlesbaren Zeichen einem bestimmbaren Muster und/ oder einem bestimmbaren Farbschema unterliegt
und
das Mautsystem ausgebildet ist,
- aus der von der optischen Erfassungseinrichtung aufgenommenen Bild von der straßenseitigen Anordnung von maschinenlesbaren Zeichen das besagte Muster und/ oder Farbschema zu bestimmen und
- nur in dem Fall, in dem das bestimmte Muster einem vorbestimmten Muster und/ oder das bestimmte Farbschema einem vorbestimmten Farbschema entspricht, Bilddaten der straßenseitigen Anordnung von maschinenlesbaren Zeichen zur Ermittlung der ersten Streckenabschnittskennung aus der ersten Eigenpositionsinformation der straßenseitigen Anordnung von maschinenlesbaren Zeichen bereitzustellen.

8. Fahrzeugeinrichtung (10) zur Mitführung in oder an einem Fahrzeug (20), die
- wenigstens eine erste Erfassungseinrichtung, die ausgebildet ist zur Erfassung von wenigstens einer ersten Eigenpositionsinformation, die repräsentativ ist für wenigstens einen Streckenabschnitt (40), den das Fahrzeug (20) befährt,
und
- wenigstens einen ersten Speicher (17, 18b) umfasst, in dem zumindest zeitweilig wenigstens eine Fahrzeugkennung des Fahrzeugs (20) gespeichert ist,
und ausgebildet ist,
- aus wenigstens einer erfassten ersten Eigenpositionsinformationen wenigstens eine erste Streckenabschnittskennung des befahrenen Streckenabschnitts (40) zu ermitteln,
- anhand wenigstens der ersten ermittelten Streckenabschnittskennung eine Mautgebühr für die Nutzung wenigstens eines ersten, durch die ermittelte erste Streckenabschnittskennung bezeichneten, Streckenabschnitts (40) durch das Fahrzeug zu bestimmen und
- die bestimmte Mautgebühr im ersten Speicher (17, 18b) oder in wenigstens einem zweiten Speicher (16) der Fahrzeugeinrichtung (10) abzuspeichern,
**dadurch gekennzeichnet, dass**
- die erste Erfassungseinrichtung eine optische Erfassungseinrichtung (14) ist, die ausgebildet ist,
- wenigstens ein Bild einer straßenseitigen Anordnung von maschinenlesbaren Zeichen (41, 41a, 41b, 41c) aufzunehmen,
mit der die erste Eigenpositionsinformation bereitgestellt wird, und
- damit die erste Eigenpositionsinformation der straßenseitigen Anordnung von maschinenlesbaren Zeichen (41, 41a, 41b, 41c) optisch zu erfassen.

9. Fahrzeugeinrichtung (10) nach Anspruch 8 **gekennzeichnet durch**
- eine Positionsbestimmungseinrichtung (12) mit einem GNSS-Empfänger (12a)
und
- eine zweite Erfassungseinrichtung, die eine elektronische Erfassungseinrichtung (11) ist, welche ausgebildet ist, **durch** die Positionsbestimmungseinrichtung (12) bereitgestellte Fahrwegmesswerte, die wenigstens eine zweite Eigenpositionsinformation in Form von wenigstens einer geographischen Position umfassen, zu erfassen, wobei die Fahrzeugeinrichtung (10) ferner ausgebildet ist,
- eine oder mehrere zweite Eigenpositionsinformationen und/ oder davon abgeleitete eine oder mehrere dritte Eigenpositionsinformationen mit einer oder mehreren in der Fahrzeugeinrichtung (10) gespeicherten geographischen Referenzpositionsinformationen zu vergleichen, die mit einer zweiten Streckenabschnittskennung des befahrenen Streckenabschnitts (40) verknüpft sind.

10. Fahrzeugeinrichtung nach Anspruch 9 **dadurch gekennzeichnet, dass**
die Fahrzeugeinrichtung ausgebildet ist,
- einerseits die Korrektheit oder eine ausreichende Qualität von durch die Positionsbestimmungseinrichtung (12) bereitgestellten geographischen Positionen und/ oder von durch den GNSS-Empfänger (12a) empfangenen GNSS-Signalen GNSS-positiv zu erkennen
und im Falle einer solchen GNSS-Positiv-Erkennung
die Mautgebühr für die Nutzung des entsprechenden Streckenabschnitts (40) durch das Fahrzeug anhand der ermittelten zweiten Streckenabschnittskennung zu bestimmen,
und
- andererseits
das Ausbleiben von durch die Positionsbestimmungseinrichtung (12) bereitzustellenden geographischen Positionen und/ oder von durch den GNSS-Empfänger (12a) zu empfangenden GNSS-Signalen
oder
i) eine Fehlerhaftigkeit,
ii) eine mangelnde Qualität oder
iii) die Zugehörigkeit zu einen bestimmten Wertebereich
wenigstens einer von der Positionsbestimmungseinrichtung (12) bereitgestellten geographischen Position und/ oder von dem GNSS-Empfänger (12a) empfangenen Signalen GNSS-negativ zu erkennen,
und
- im Fall einer solchen GNSS-Negativ-Erkennung die Mautgebühr für die Nutzung des entsprechenden Streckenabschnitts (40) durch das Fahrzeug anhand der ermittelten ersten Streckenabschnittskennung zu bestimmen.

11. Fahrzeugeinrichtung (1) nach Anspruch 10 **dadurch gekennzeichnet, dass**
die Fahrzeugeinrichtung (10) ausgebildet ist,
- im Fall der positiven Erkennung die optische Erfassungseinrichtung (14) in einen Untätigkeitszustand zu versetzen, in dem sie keine Bildaufnahmen durchführt,
und
- im Fall der negativen Erkennung die optische Erfassungseinrichtung (14) in einen Tätigkeitszustand zu versetzen, in dem sie Bildaufnahmen durchführt.

12. Mauterhebungsverfahren, umfassend
- die Erfassung wenigstens einer ersten Eigenpositionsinformation, die repräsentativ ist für einen Streckenabschnitt (40), den ein Fahrzeug (20) befährt, mittels wenigstens einer ersten Erfassungseinrichtung einer von einem Fahrzeug mitgeführten Fahrzeugeinrichtung (10),
- die Ermittlung wenigstens einer ersten Streckenabschnittskennung aus wenigstens einer erfassten ersten Eigenpositionsinformation mittels einer Datenverarbeitungseinrichtung (10, 50),
- die Bestimmung wenigstens einer Mautgebühr anhand wenigstens der ersten ermittelten Streckenabschnittskennung für die Nutzung wenigstens eines ersten, durch die ermittelte erste Streckenabschnittskennung bezeichneten, Streckenabschnitts (40) durch das Fahrzeug (20) mittels einer Datenverarbeitungseinrichtung (10, 50), und
- die Speicherung der bestimmten Mautgebühr in wenigstens einem Speicher (16, 17, 18b) der Fahrzeugeinrichtung (10), in der eine Fahrzeugkennung des Fahrzeugs gespeichert ist, oder in wenigstens einem Speicher (56, 57) einer zentralen Datenverarbeitungseinrichtung (50), in der eine Fahrzeugkennung des Fahrzeugs (20) gespeichert ist, mittels einer Datenverarbeitungseinrichtung (10,50),
**dadurch gekennzeichnet, dass**
- die Erfassung eine optische Erfassung der ersten Eigenpositionsinformation in Form einer straßenseitigen Anordnung von maschinenlesbaren Zeichen (41, 41a, 41b, 41c) ist, wobei
- die optische Erfassung die Aufnahme wenigstens eines Bildes der straßenseitigen Anordnung von maschinenlesbaren Zeichen (41, 41a, 41b, 41c) umfasst.

13. Mauterhebungsverfahren nach Anspruch 12
**dadurch gekennzeichnet, dass**
- die Streckenabschnittskennung in der ersten Eigenpositionsinformation codiert ist,
und **gekennzeichnet durch** die Schritte
- des Versendens der erfassten ersten Eigenpositionsinformation mittels einer Mobilfunkkommunikation von der Fahrzeugeinrichtung (10) an eine zentrale Datenverarbeitungseinrichtung (50),
- des Ermittelns der Streckenabschnittskennung aus der von der zentralen Datenverarbeitungseinrichtung (50) empfangenen ersten Eigenpositionsinformation **durch** Decodieren der ersten Eigenpositionsinformation mittels der zentralen Datenverarbeitungseinrichtung (50) und
- des Versendens der ermittelten Streckenabschnittskennung mittels Mobilfunkkommunikation von der zentralen Datenverarbeitungseinrichtung (50) an die Fahrzeugeinrichtung (10).

14. Mauterhebungsverfahren nach Anspruch 13
**gekennzeichnet durch**
eine Anweisung zum Versenden der erfassten ersten Eigenpositionsinformation an die zentrale Datenverarbeitungseinrichtung (50), die von oder in Ergänzung zu der straßenseitigen Anordnung von maschinenlesbaren Zeichen (41, 41 a, 41 b, 41 c) maschinenlesbar bereitgestellt wird,
und umfassend die Schritte
- der optischen Erfassung der Anweisung mittels der ersten Erfassungseinrichtung (14) der Fahrzeugeinrichtung (10) im Zuge der Aufnahme wenigstens eines Bildes der straßenseitigen Anordnung von maschinenlesbaren Zeichen (41, 41a, 41 b, 41 c) und
- die Erkennung der Anweisung aus dem wenigstens einen aufgenommenen Bild **durch** die Fahrzeugeinrichtung (10).

15. Mauterhebungsverfahren umfassend
- die Erfassung oder zumindest den Versuch der Erfassung von
(i) durch eine mit einem GNSS-Empfänger (12a) ausgestattete Positionsbestimmungseinrichtung (12) der Fahrzeugeinrichtung (10) bereitgestellten geographischen Positionen
oder
(ii) durch den GNSS-Empfänger (12a) empfangenen Signalen mittels wenigstens einer zweiten Erfassungseinrichtung (11) der Fahrzeugeinrichtung (10)
und
- die GNSS-Positiv-Erkennung der Korrektheit oder einer ausreichende Qualität von durch die Positionsbestimmungseinrichtung (12) bereitgestellten geographischen Positionen und/ oder von durch den GNSS-Empfänger (12a) empfangenen GNSS-Signalen
oder
- die GNSS-Negativ-Erkennung
des Ausbleibens von durch die Positionsbestimmungseinrichtung (12) bereitzustellenden geographischen Positionen und/ oder von durch den GNSS-Empfänger (12a) zu empfangenden GNSS-Signalen
oder
i) einer Fehlerhaftigkeit,
ii) einer mangelnde Qualität oder
iii) der Zugehörigkeit zu einen bestimmten Wertebereich
wenigstens einer von der Positionsbestimmungseinrichtung (12) bereitgestellten geographischen Position und/ oder von dem GNSS-Empfänger (12a) empfangenen Signalen,
wobei
im Falle der GNSS-Positiv-Erkennung die folgenden Schritte durchgeführt werden:
- die Ermittlung einer GNSS-basierten Streckenabschnittskennung aus einer oder mehreren erfassten geographischen Positionen mittels einer Datenverarbeitungseinrichtung (10, 50);
- die Bestimmung einer Mautgebühr anhand wenigstens der einen ermittelten GNSS-basierten Streckenabschnittskennung für die Nutzung wenigstens eines ersten, durch die ermittelte erste Streckenabschnittskennung bezeichneten, Streckenabschnitts (40) durch das Fahrzeug (20) mittels einer Datenverarbeitungseinrichtung (10, 50); und
- die Zuordnung der bestimmten Mautgebühr zu wenigstens einer Fahrzeugkennung, die zumindest zeitweilig in einem Speicher (16, 17, 18b) der Fahrzeugeinrichtung (10) gespeichert ist, mittels einer Datenverarbeitungseinrichtung (10, 50);
**dadurch gekennzeichnet, dass**
im Falle der GNSS-Negativ- Erkennung ein Mauterhebungsverfahren nach einem der Ansprüche 12 bis 14 durchgeführt wird.
